# EUROPEAN PATENT APPLICATION

(11) **EP 3 604 250 A1**
(43) Date of publication of application: **05.02.2020**
(21) Application number: 18776285.1
(22) Date of filing: 30.03.2018
(51) Int. Cl.: C03C 27/12, B32B 17/10, B32B 27/30, B32B 27/32, B60J 1/00

(54) **THERMOPLASTIC RESIN FILM AND GLASS PLATE-CONTAINING LAMINATE**

(30) Priority: 31.03.2017 JP 2017072880
(71) Applicant: Sekisui Chemical Co., Ltd., Osaka-shi, Osaka 530-8565 (JP)
(72) Inventor: YOSHIDA, Shougo, Kouka-shi Shiga 528-8585 (JP); NAKAYAMA, Kazuhiko, Kouka-shi Shiga 528-8585 (JP); NOHARA, Atsushi, Kouka-shi Shiga 528-8585 (JP)
(74) Representative: Ter Meer Steinmeister & Partner
(86) International application number: PCT/JP2018/014004
(87) International publication number: WO 2018/182030

(57) **Abstract**

Provided is a thermoplastic resin film capable of controlling the occurrence of color irregularity after irradiation with light. The thermoplastic resin film according to the present invention contains a thermoplastic resin, a pigment, and a hindered amine light stabilizer.

## Description

### TECHNICAL FIELD

The present invention relates to a thermoplastic resin film that is favorably used while it is bonded to other members such as a glass plate. Also, the present invention relates to a glass plate-including laminate prepared with the thermoplastic resin film.

### BACKGROUND ART

A glass plate-including laminate in which a resin film is bonded to a glass plate is known. Among glass plate-including laminates, laminated glass is broadly used.

Since laminated glass generates only a small amount of scattering glass fragments even when subjected to external impact and broken, laminated glass is excellent in safety. As such, the laminated glass is widely used for automobiles, railway vehicles, aircrafts, ships, buildings and the like. The laminated glass is produced by sandwiching a thermoplastic resin film between a pair of glass plates. Besides the laminated glass, the thermoplastic resin film is sometimes used while it is bonded to a member other than a glass plate.

The thermoplastic resin film used for the laminated glass is disclosed, for example, in the following Patent Document 1.

The following Patent Document 1 discloses an interlayer film having low yellowing tendency, high transmittance to UV-A rays and visible light, and low transmittance to UV-B rays. The interlayer film contains a polyvinyl acetal, a plasticizer, and an oxanilide type compound which is a UV absorber. Patent Document 1 indicates that the interlayer film may contain a nonaromatic light stabilizer of HAS/HALS/NOR-HALS type, and that the interlayer film may contain a dye.

### Related Art Document

### Patent Document

Patent Document 1: US2012/0052310A1

### SUMMARY OF THE INVENTION

### PROBLEMS TO BE SOLVED BY THE INVENTION

In conventional thermoplastic resin films as those described in Patent Document 1, the light resistance is low, and the color tone can become different between an edge part and inside the edge part to result in color irregularity after irradiation with light.

It is an object of the present invention to provide a thermoplastic resin film capable of controlling the occurrence of color irregularity after irradiation with light. It is also an object of the present invention to provide a glass plate-including laminate prepared with the thermoplastic resin film.

### MEANS FOR SOLVING THE PROBLEMS

According to a broad aspect of the present invention, there is provided a thermoplastic resin film (in the specification, also abbreviated as "resin film") including a thermoplastic resin, a pigment, and a hindered amine light stabilizer.

In a specific aspect of the resin film according to the present invention, the thermoplastic resin is a polyvinyl acetal resin or an ionomer resin.

In a specific aspect of the resin film according to the present invention, the resin film contains a plasticizer.

It is preferred that the resin film according to the present invention contain a phthalocyanine compound, a quinacridone compound, an azo compound, a pentaphene compound, a dioxazine compound, a perylene compound, an indole compound or carbon black as the pigment. It is preferred that the phthalocyanine compound have a maximum absorption wavelength of 500 nm or more and 740 nm or less. The resin film according to the present invention may contain a phthalocyanine compound, or may contain a quinacridone compound, a perylene compound or an indole compound, or may contain carbon black as the pigment.

In a specific aspect of the resin film according to the present invention, when a glass plate-including laminate is obtained by sandwiching a thermoplastic resin film between two sheets of green glass having a thickness of 2 mm in accordance with JIS R3208, the obtained glass plate-including laminate has a haze value of 5% or less.

In a specific aspect of the resin film according to the present invention, the resin film includes a first surface layer and a second surface layer.

In a specific aspect of the resin film according to the present invention, the resin film includes an intermediate layer between the first surface layer and the second surface layer.

In a specific aspect of the resin film according to the present invention, the intermediate layer contains the pigment.

In a specific aspect of the resin film according to the present invention, the intermediate layer contains the hindered amine light stabilizer, the first surface layer optionally contains the hindered amine light stabilizer, when the first surface layer contains the hindered amine light stabilizer, a content of the hindered amine light stabilizer in 100% by weight of the intermediate layer is larger than a content of the hindered amine light stabilizer in 100% by weight of the first surface layer, the second surface layer optionally contains the hindered amine light stabilizer, and when the second surface layer contains the hindered amine light stabilizer, a content of the hindered amine light stabilizer in 100% by weight of the intermediate layer is larger than a content of the hindered amine light stabilizer in 100% by weight of the second surface layer.

In a specific aspect of the resin film according to the present invention, the hindered amine light stabilizer is a hindered amine light stabilizer in which an alkyl group or an alkoxy group is bonded to a nitrogen atom of a piperidine structure.

It is preferred that the resin film according to the present invention be a thermoplastic resin film to be used while it is bonded to a glass plate.

According to a broad aspect of the present invention, there is provided a glass plate-including laminate including a first glass plate, and the above-described thermoplastic resin film, the thermoplastic resin film being bonded to the first glass plate.

In a specific aspect of the glass plate-including laminate according to the present invention, the glass plate-including laminate includes the first glass plate as a first lamination glass member, the thermoplastic resin film, and a second lamination glass member, and the thermoplastic resin film is bonded to the first glass plate, the thermoplastic resin film is bonded to the second lamination glass member, and the thermoplastic resin film is arranged between the first glass plate and the second lamination glass member.

The glass plate-including laminate according to the present invention may be automotive side glass, may be automotive rear glass, or may be automotive roof glass.

### EFFECT OF THE INVENTION

Since the thermoplastic resin film according to the present invention contains a thermoplastic resin, a pigment, and a hindered amine light stabilizer, it is possible to control the occurrence of color irregularity after the thermoplastic resin film according to the present invention is irradiated with light.

### BRIEF DESCRIPTION OF DRAWINGS

[Fig. 1] Fig. 1 is a sectional view showing a glass plate-including laminate prepared with a thermoplastic resin film according to one embodiment of the present invention.
[Fig. 2] Fig. 2 is a sectional view showing a modified example of a glass plate-including laminate prepared with the thermoplastic resin film according to one embodiment of the present invention.
[Fig. 3] Fig. 3 is a view showing laminated glass in which color irregularity occurred in the evaluation of color irregularity after irradiation with light.

### MODE(S) FOR CARRYING OUT THE INVENTION

Hereinafter, the details of the present invention will be described.

The thermoplastic resin film according to the present invention (in the specification, also abbreviated as "resin film") is favorably used while it is bonded to other members such as a glass plate. The other member is an objective member to be bonded.

The resin film according to the present invention contains a thermoplastic resin, a pigment, and a hindered amine light stabilizer.

Since the above-described configuration is provided in the present invention, it is possible to control the occurrence of color irregularity after irradiation with light. The resin film according to the present invention has high light resistance. After the resin film according to the present invention is irradiated with light, the color tone is less likely to differ between an edge part and inside the edge part, and color irregularity is less likely to occur.

The resin film according to the present invention is favorably used while it is bonded to a glass plate, and is favorably used so as to obtain a glass plate-including laminate. In the present invention, it is possible to enhance the light resistance of the glass plate-including laminate, and it is possible to control the occurrence of color irregularity.

Furthermore, since the above configuration is employed in the present invention, discoloration can also be controlled. When the glass plate-including laminate has high transparency, high transparency can be kept over a long-term use or under exposure to high temperature, so that reduction in visible light transmittance can also be prevented.

The resin film may have a one-layer structure, may have a two or more-layer structure, may have a three or more-layer structure, and may have a four or more-layer structure. The resin film may have a two or more-layer structure, and may be provided with a first surface layer and a second surface layer. The resin film may have a three or more-layer structure, and may be provided with an intermediate layer between the first surface layer and the second surface layer. The resin film may be provided with two or more intermediate layers. The resin film may be provided with a first intermediate layer and a second intermediate layer.

A thermoplastic resin film is sandwiched between two sheets of green glass having a thickness of 2 mm in accordance with JIS R3208 to obtain a glass plate-including laminate. The obtained glass plate-including laminate has a total light transmittance of preferably 1% or more, more preferably 4% or more, and of preferably 50% or less, more preferably 35% or less, further preferably 20% or less, and especially preferably 10% or less. It is preferred that the thermoplastic resin film have a region satisfying the lower limit or the upper limit of the total light transmittance.

From the viewpoint of effectively controlling color irregularity after irradiation with light, it is preferred that the total light transmittance of the surface layer be higher than the total light transmittance of the intermediate layer. From the viewpoint of effectively controlling color irregularity after irradiation with light, the total light transmittance of the surface layer is higher than the total light transmittance of the intermediate layer preferably by 10% or more, more preferably by 50% or more.

The total light transmittance is a sum of the parallel light transmittance and the diffused light transmittance. The total light transmittance is measured in accordance with JIS R3106:1998. Specifically, a spectral transmittance is measured by a spectrophotometer while an object to be measured is brought into close and parallel contact with an opening of an integrating sphere so that all the transmitted rays are received by the integrating sphere. The total light transmittance means a visible light transmittance calculated from the spectral transmittance measured in this condition. Examples of the spectrophotometer include "U-4100" available from Hitachi High-Technologies Corporation.

Hereinafter, materials that can be used in the resin film according to the present invention are specifically described.

### (Thermoplastic resin)

The resin film contains a thermoplastic resin. Examples of the thermoplastic resin include a polyvinyl acetal resin, an ionomer resin, an ethylene-vinyl acetate copolymer resin, an ethylene-acrylic acid copolymer resin, a polyurethane resin, a polyvinyl alcohol resin, and a cycloolefin resin.

In the resin film according to the present invention, the thermoplastic resin contained in the resin film is preferably a polyvinyl acetal resin or an ionomer resin, and more preferably a polyvinyl acetal resin. It is preferred that the surface layer and the intermediate layer contain a polyvinyl acetal resin or an ionomer resin. One kind of each of the polyvinyl acetal resin and the ionomer resin may be used alone, and two or more kinds thereof may be used in combination.

For example, the polyvinyl acetal resin can be produced by acetalizing polyvinyl alcohol with an aldehyde. It is preferred that the polyvinyl acetal resin be an acetalized product of polyvinyl alcohol. For example, the polyvinyl alcohol can be produced by saponifying polyvinyl acetate. The saponification degree of the polyvinyl alcohol generally lies within the range of 70 to 99.9% by mole.

An average polymerization degree of the polyvinyl alcohol is preferably 200 or more, more preferably 500 or more, and is preferably 3500 or less, more preferably 3000 or less, and further preferably 2500 or less. When the average polymerization degree is the above lower limit or more, the penetration resistance of the glass plate-including laminate is further enhanced. When the average polymerization degree is the above upper limit or less, formation of a resin film is facilitated.

The average polymerization degree of the polyvinyl alcohol is determined by a method in accordance with JIS K6726 "Testing methods for polyvinyl alcohol".

The number of carbon atoms of the acetal group contained in the polyvinyl acetal resin is not particularly limited. The aldehyde used at the time of producing the polyvinyl acetal resin is not particularly limited. It is preferred that the number of carbon atoms of the acetal group in the polyvinyl acetal resin be 3 or 4. When the number of carbon atoms of the acetal group in the polyvinyl acetal resin is 3 or more, the glass transition temperature of the resin film is sufficiently lowered.

The aldehyde is not particularly limited. In general, an aldehyde with 1 to 10 carbon atoms is preferably used. Examples of the aldehyde with 1 to 10 carbon atoms include formaldehyde, acetaldehyde, propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, benzaldehyde, and the like. Propionaldehyde, n-butyraldehyde, isobutyraldehyde, n-hexylaldehyde, or n-valeraldehyde is preferred, propionaldehyde, n-butyraldehyde, or isobutyraldehyde is more preferred, and n-butyraldehyde is further preferred. One kind of the aldehyde may be used alone, and two or more kinds thereof may be used in combination.

The content of the hydroxyl group (the amount of hydroxyl groups) of the polyvinyl acetal resin is preferably 15% by mole or more, and more preferably 18% by mole or more and is preferably 40% by mole or less, and more preferably 35% by mole or less. When the content of the hydroxyl group is the above lower limit or more, the adhesive force of the resin film is further enhanced. Moreover, when the content of the hydroxyl group is the above upper limit or less, the flexibility of the resin film is enhanced and the handling of the resin film is facilitated.

The content of the hydroxyl group of the polyvinyl acetal resin is a mole fraction, represented in percentage, obtained by dividing the amount of ethylene groups to which the hydroxyl group is bonded by the total amount of ethylene groups in the main chain. For example, the amount of ethylene groups to which the hydroxyl group is bonded can be determined in accordance with JIS K6728 "Testing methods for polyvinyl butyral".

The acetylation degree (the amount of acetyl groups) of the polyvinyl acetal resin is preferably 0.1% by mole or more, more preferably 0.3% by mole or more, and further preferably 0.5% by mole or more and preferably 30% by mole or less, more preferably 25% by mole or less, and further preferably 20% by mole or less. When the acetylation degree is the above lower limit or more, the compatibility between the polyvinyl acetal resin and a plasticizer is enhanced. When the acetylation degree is the above upper limit or less, with regard to the resin film and the glass plate-including laminate, the moisture resistance thereof is enhanced.

The acetylation degree is a mole fraction, represented in percentage, obtained by dividing the amount of ethylene groups to which the acetyl group is bonded by the total amount of ethylene groups in the main chain. For example, the amount of ethylene groups to which the acetyl group is bonded can be determined in accordance with JIS K6728 "Testing methods for polyvinyl butyral".

The acetalization degree of the polyvinyl acetal resin (the butyralization degree in the case of a polyvinyl butyral resin) is preferably 60% by mole or more, and more preferably 63% by mole or more and is preferably 85% by mole or less, more preferably 75% by mole or less, and further preferably 70% by mole or less. When the acetalization degree is the above lower limit or more, the compatibility between the polyvinyl acetal resin and a plasticizer is enhanced. When the acetalization degree is the above upper limit or less, the reaction time required for producing the polyvinyl acetal resin is shortened.

The acetalization degree is determined in the following manner. First, from the total amount of ethylene groups in the main chain, the amount of ethylene groups to which the hydroxyl group is bonded, and the amount of ethylene groups to which the acetyl group is bonded are subtracted. The obtained value is divided by the total amount of ethylene groups in the main chain to determine a mole fraction. The mole fraction represented in percentage is the acetalization degree.

In this connection, it is preferred that the content of the hydroxyl group (the amount of hydroxyl groups), the acetalization degree (the butyralization degree) and the acetylation degree be calculated from the results determined by a method in accordance with JIS K6728 "Testing methods for polyvinyl butyral". In this context, a method in accordance with ASTM D1396-92 may be used. When the polyvinyl acetal resin is a polyvinyl butyral resin, the content of the hydroxyl group (the amount of hydroxyl groups), the acetalization degree (the butyralization degree) and the acetylation degree be calculated from the results determined by a method in accordance with JIS K6728 "Testing methods for polyvinyl butyral".

### (Plasticizer)

From the viewpoint of appropriately enhancing the adhesive force of a resin film, it is preferred that the resin film contain a plasticizer. It is preferred that the surface layer and the intermediate layer contain a plasticizer. By using a polyvinyl acetal resin and a plasticizer together, the adhesive force of the resin film according to the present invention for a glass plate, a lamination glass member, other resin films or the like is further enhanced. One kind of the plasticizer may be used alone, and two or more kinds thereof may be used in combination.

The plasticizer is not particularly limited. Examples of the plasticizer include organic ester plasticizers such as a monobasic organic acid ester and a polybasic organic acid ester, organic phosphate plasticizers such as an organic phosphate plasticizer and an organic phosphite plasticizer, and the like. Organic ester plasticizers are preferred. It is preferred that the plasticizer be a liquid plasticizer.

Examples of the monobasic organic acid ester include, but are not particularly limited to, a glycol ester obtained by the reaction of a glycol with a monobasic organic acid, and the like. Examples of the glycol include triethylene glycol, tetraethylene glycol, tripropylene glycol, and the like. Examples of the monobasic organic acid include butyric acid, isobutyric acid, caproic acid, 2-ethylbutyric acid, heptanoic acid, n-octylic acid, 2-ethylhexanoic acid, n-nonylic acid, decanoic acid, and the like.

Examples of the polybasic organic acid ester include, but are not particularly limited to, an ester compound of a polybasic organic acid and an alcohol having a linear or branched structure of 4 to 8 carbon atoms. Examples of the polybasic organic acid include adipic acid, sebacic acid, azelaic acid, and the like.

Examples of the organic ester plasticizer include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyds, a mixture of a phosphoric acid ester and an adipic acid ester, and the like. Organic ester plasticizers other than these may be used. Other adipic acid esters other than the above-described adipic acid esters may be used.

Examples of the organic phosphate plasticizer include, but are not particularly limited to, tributoxyethyl phosphate, isodecyl phenyl phosphate, triisopropyl phosphate, and the like.

It is preferred that the plasticizer be a diester plasticizer represented by the following formula (1).

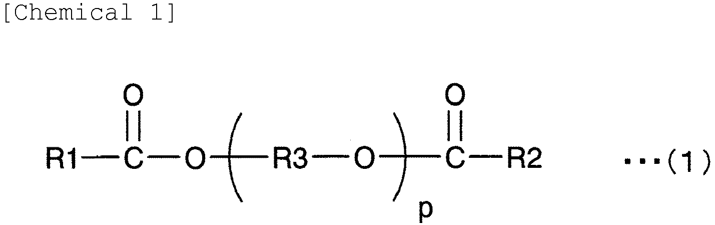

In the foregoing formula (1), R1 and R2 each represent an organic group with 5 to 10 carbon atoms, R3 represents an ethylene group, an isopropylene group, or an n-propylene group, and p represents an integer of 3 to 10. It is preferred that R1 and R2 in the foregoing formula (1) each be an organic group with 6 to 10 carbon atoms.

It is preferred that the plasticizer include triethylene glycol di-2-ethylhexanoate (3GO) or triethylene glycol di-2-ethylbutyrate, and it is more preferred that the plasticizer include triethylene glycol di-2-ethylhexanoate.

The content of the plasticizer is not particularly limited. In the resin film, the content of the plasticizer relative to 100 parts by weight of the thermoplastic resin is preferably 25 parts by weight or more, and more preferably 30 parts by weight or more and is preferably 60 parts by weight or less, more preferably 50 parts by weight or less, further preferably 45 parts by weight or less, and further preferably 40 parts by weight or less. When the content of the plasticizer is the above lower limit or more, the penetration resistance of the glass plate-including laminate is further enhanced. When the content of the plasticizer is the above upper limit or less, the transparency of the resin film is further enhanced.

### (Pigment)

From the viewpoint of controlling color irregularity after irradiation with light, it is preferred that the resin film contain the pigment together with the hindered amine light stabilizer. From the viewpoint of effectively controlling color irregularity after irradiation with light, it is preferred that the intermediate layer contain the pigment. The surface layer may contain the pigment, or may not contain the pigment. When the resin film has a multilayer structure, it is preferred that the pigment and the hindered amine light stabilizer be contained in the same layer.

Which of dyes and pigments the coloring agent is categorized in can be discriminated according to the classification by the color index.

In the present specification, for coloring agents and the like that are not described in the color index, "pigment" and "dye" may be defined as follows. A polyvinyl butyral resin (the polymerization degree of polyvinyl alcohol of 1700, the content of the hydroxyl group of 30% by mole, the acetylation degree of 1% by mole, the butyralization degree of 69% by mole) is prepared. One hundred parts by weight of the polyvinyl butyral resin, 40 parts by weight of triethylene glycol di-2-ethylhexanoate (3GO), and a coloring agent in an amount of 0.015% by weight, relative to 100% by weight of the total amount of the polyvinyl butyral resin and 3GO are kneaded and extruded to give a resin film (single layer) having a thickness of 760 µm. Laminated glass is prepared with the resin film, and two sheets of clear glass (2.5 mm thick) having a visible light transmittance of 90% as measured in accordance with JIS R3106:1998, and when the obtained laminated glass has a haze value of 0.35% or more, the coloring agent is determined as a pigment. The coloring agent having a haze value of less than 0.35% is determined as a dye.

The pigment may be an organic pigment or may be an inorganic pigment. The organic pigment may be an organic pigment having a metal atom, or may be an organic pigment not having a metal atom. One kind of the pigment may be used alone, and two or more kinds thereof may be used in combination.

Examples of the organic pigment include a phthalocyanine compound, a quinacridone compound, an azo compound, a pentaphene compound, a perylene compound, an indole compound and a dioxazine compound.

It is preferred that the color tone of the organic pigment be yellow, orange, red, violet, blue or green.

Examples of the inorganic pigment include carbon black, and iron oxide, zinc oxide and titanium oxide.

It is preferred that the resin film according to the present invention contain a phthalocyanine compound, a quinacridone compound, an azo compound, a pentaphene compound, a dioxazine compound, a perylene compound, an indole compound or carbon black as the pigment. It is preferred that the phthalocyanine compound has a maximum absorption wavelength of 500 nm or more and 740 nm or less. The resin film according to the present invention may contain a phthalocyanine compound, or may contain a quinacridone compound, a perylene compound or an indole compound, or may contain carbon black as the pigment.

Examples of the phthalocyanine compound include phthalocyanine and derivatives of phthalocyanine. The phthalocyanine compound has a phthalocyanine skeleton.

The phthalocyanine compound preferably contains a vanadium atom or a copper atom, and more preferably contains a copper atom. The phthalocyanine compound may contain a vanadium atom. It is more preferred that the phthalocyanine compound be phthalocyanine containing a vanadium atom or a copper atom, or a derivative of phthalocyanine containing a vanadium atom or a copper atom, and it is more preferred that the phthalocyanine compound be phthalocyanine containing a copper atom or a derivative of phthalocyanine containing a copper atom. From the viewpoint of further enhancing the heat shielding properties of the resin film and the glass plate-including laminate, it is preferred that the phthalocyanine compound have a structural unit in which an oxygen atom is bonded to a copper atom.

From the viewpoint of further controlling color irregularity after irradiation with light, it is preferred that the phthalocyanine compound have a maximum absorption wavelength of 500 nm or more and 740 nm or less.

Examples of the quinacridone compound include quinacridone and derivatives of quinacridone. The quinacridone has a quinacridone skeleton.

Examples of the perylene compound include perylene and derivatives of perylene. The perylene has a perylene skeleton.

The azo compound has an azo skeleton.

Examples of the pentaphene compound include pentaphene and derivatives of pentaphene. The pentaphene has a pentaphene skeleton.

Examples of the indole compound include indole and derivatives of indole. The indole has an indole skeleton.

Examples of the dioxazine compound include dioxazine and derivatives of dioxazine. The dioxazine has a dioxazine skeleton.

From the viewpoint of lowering the haze value, and effectively controlling color irregularity after irradiation with light, the content of the pigment in 100% by weight of the resin film is preferably 0.001% by weight or more, more preferably 0.01% by weight or more, and further preferably 0.03% by weight or more, and is preferably 0.4% by weight or less, more preferably 0.2% by weight or less, and further preferably 0.1% by weight or less.

When the resin film has a multilayer structure, the content of the pigment in 100% by weight of the layer containing the pigment is preferably 0.001% by weight or more, more preferably 0.01% by weight or more, and further preferably 0.03% by weight or more, from the viewpoint of lowering the haze value, and effectively controlling color irregularity after irradiation with light. When the resin film has a multilayer structure, the content of the pigment in 100% by weight of the layer containing the pigment is preferably 0.4% by weight or less, more preferably 0.2% by weight or less, and further preferably 0.1% by weight or less from the viewpoint of lowering the haze value, and effectively controlling color irregularity after irradiation with light.

### (Hindered amine light stabilizer)

From the viewpoint of controlling color irregularity after irradiation with light, and controlling discoloration, it is preferred that the resin film contain the hindered amine light stabilizer together with the pigment. By using the hindered amine light stabilizer, discoloration is further controlled and the visible light transmittance is less likely to lower even when the resin film is used over a long term or exposed to sunlight. From the viewpoint of effectively controlling color irregularity after irradiation with light, it is preferred that the intermediate layer contain the hindered amine light stabilizer. The surface layer optionally contains the hindered amine light stabilizer. The surface layer may contain the hindered amine light stabilizer, or may not contain the hindered amine light stabilizer. One kind of the hindered amine light stabilizer may be used alone and two or more kinds thereof may be used in combination.

Examples of the hindered amine light stabilizer include hindered amine light stabilizers in which an alkyl group, an alkoxy group or a hydrogen atom is bonded to a nitrogen atom of the piperidine structure. From the viewpoint of further suppressing the discoloration, a hindered amine light stabilizer in which an alkyl group or an alkoxy group is bonded to a nitrogen atom of the piperidine structure is preferred. The hindered amine light stabilizer is preferably a hindered amine light stabilizer in which an alkyl group is bonded to a nitrogen atom of the piperidine structure, and also preferably a hindered amine light stabilizer in which an alkoxy group is bonded to a nitrogen atom of the piperidine structure.

As the hindered amine light stabilizer in which an alkyl group is bonded to a nitrogen atom of the piperidine structure, "Tinuvin765" and "Tinuvin622SF" available from BASF, and "ADK STAB LA-52" available from ADEKA, or the like can be recited.

As the hindered amine light stabilizer in which an alkoxy group is bonded to a nitrogen atom of the piperidine structure, "TinuvinXT-850FF" and "TinuvinXT-855FF" available from BASF, and "ADK STAB LA-81" available from ADEKA, or the like can be recited.

As the hindered amine light stabilizer in which a hydrogen atom is bonded to a nitrogen atom of the piperidine structure, "Tinuvin770DF" available from BASF, and "Hostavin N24" available from Clariant, or the like can be recited.

From the viewpoint of further suppressing the discoloration, the light stabilizer has a molecular weight of preferably 2000 or less, more preferably 1000 or less, further preferably 700 or less.

From the viewpoint of further controlling the discoloration, the hindered amine light stabilizer has a molecular weight of preferably 2000 or less, more preferably 1000 or less, further preferably 700 or less.

From the viewpoint of further controlling color irregularity and discoloration after irradiation with light, the content of the hindered amine light stabilizer in 100% by weight of the resin film is preferably 0.0025% by weight or more, and more preferably 0.025% by weight or more and is preferably 0.5% by weight or less, and more preferably 0.3% by weight or less.

When the resin film has a multilayer structure, the content of the hindered amine light stabilizer in 100% by weight of the layer containing the hindered amine light stabilizer is preferably 0.0025% by weight or more, and more preferably 0.025% by weight or more and is preferably 0.5% by weight or less, and more preferably 0.3% by weight or less, from the viewpoint of further controlling color irregularity and discoloration after irradiation with light.

When the surface layer (first surface layer and second surface layer) contains the hindered amine light stabilizer, it is preferred that the content of the hindered amine light stabilizer in 100% by weight of the intermediate layer be larger than the content of the hindered amine light stabilizer in 100% by weight of the surface layer, from the viewpoint of further controlling color irregularity and discoloration after irradiation with light. From the viewpoint of further controlling color irregularity and discoloration after irradiation with light, an absolute value of a difference between the content of the hindered amine light stabilizer in 100% by weight of the intermediate layer, and the content of the hindered amine light stabilizer in 100% by weight of the surface layer is preferably 0.001% by weight or more, more preferably 0.0025% by weight or more, and further preferably 0.025% by weight or more.

### (Metal salt)

It is preferred that the resin film and the surface layer contain a magnesium salt, an alkali metal salt, or an alkaline earth metal salt (hereinafter, these are sometimes described collectively as Metal salt M). The intermediate layer may contain the Metal salt M. By using the metal salt M, control of the adhesive force of the resin film according to the present invention for a glass plate, a lamination glass member or other resin film is further facilitated. One kind of the Metal salt M may be used alone, and two or more kinds thereof may be used in combination.

It is preferred that the Metal salt M contain as metal Li, Na, K, Rb, Cs, Mg, Ca, Sr or Ba. It is preferred that the metal salt included in the resin film be K or Mg. In this case, both K and Mg may be contained.

Moreover, it is more preferred that the Metal salt M be an alkali metal salt of an organic acid with 2 to 16 carbon atoms or an alkaline earth metal salt of an organic acid with 2 to 16 carbon atoms, and it is further preferred that the Metal salt M be a magnesium carboxylate with 2 to 16 carbon atoms or a potassium carboxylate with 2 to 16 carbon atoms.

Examples of the magnesium carboxylate with 2 to 16 carbon atoms and the potassium carboxylate with 2 to 16 carbon atoms include magnesium acetate, potassium acetate, magnesium propionate, potassium propionate, magnesium 2-ethylbutyrate, potassium 2-ethylbutanoate, magnesium 2-ethylhexanoate, potassium 2-ethylhexanoate, and the like.

The total of the contents of Mg and K in the resin film, and the total of contents of Mg and K in the layer containing Mg or K (surface layer or the like) are preferably 5 ppm or more, more preferably 10 ppm or more, and further preferably 20 ppm or more and is preferably 300 ppm or less, more preferably 250 ppm or less, and further preferably 200 ppm or less. When the total of the contents of Mg and K is the above lower limit or more and the above upper limit or less, it is possible to control the adhesive force of the resin film for a glass plate, a lamination glass member or other resin film or the like more favorably.

### (Ultraviolet ray screening agent)

It is preferred that the resin film, the surface layer and the intermediate layer contain an ultraviolet ray screening agent. By using the ultraviolet ray screening agent, discoloration is further suppressed and the visible light transmittance is less likely to lower even when the resin film is used over a long term or used under high temperature. One kind of the ultraviolet ray screening agent may be used alone, and two or more kinds thereof may be used in combination.

Examples of the ultraviolet ray screening agent include an ultraviolet ray absorber. It is preferred that the ultraviolet ray screening agent be an ultraviolet ray absorber.

Examples of the ultraviolet ray screening agent include a metal-based ultraviolet ray screening agent (an ultraviolet ray screening agent containing a metal), a metal oxide-based ultraviolet ray screening agent (an ultraviolet ray screening agent containing a metal oxide), a benzotriazole-based ultraviolet ray screening agent (an ultraviolet ray screening agent having a benzotriazole structure), a benzophenone-based ultraviolet ray screening agent (an ultraviolet ray screening agent having a benzophenone structure), a triazine-based ultraviolet ray screening agent (an ultraviolet ray screening agent having a triazine structure), a malonic acid ester-based ultraviolet ray screening agent (an ultraviolet ray screening agent having a malonic acid ester structure), an oxanilide-based ultraviolet ray screening agent (an ultraviolet ray screening agent having an oxanilide structure), a benzoate-based ultraviolet ray screening agent (an ultraviolet ray screening agent having a benzoate structure), and the like.

Examples of the metal-based ultraviolet ray screening agent include platinum particles, particles in which the surface of platinum particles is coated with silica, palladium particles, particles in which the surface of palladium particles is coated with silica, and the like. It is preferred that the ultraviolet ray screening agent not be heat shielding particles.

The ultraviolet ray screening agent is preferably a benzotriazole-based ultraviolet ray screening agent, a benzophenone-based ultraviolet ray screening agent, a triazine-based ultraviolet ray screening agent, or a benzoate-based ultraviolet ray screening agent, more preferably a benzotriazole-based ultraviolet ray screening agent or a benzophenone-based ultraviolet ray screening agent, and further preferably a benzotriazole-based ultraviolet ray screening agent.

Examples of the metal oxide-based ultraviolet ray screening agent include zinc oxide, titanium oxide, cerium oxide, and the like. Furthermore, with regard to the metal oxide-based ultraviolet ray screening agent, the surface thereof may be coated with any material. Examples of the coating material for the surface of the metal oxide-based ultraviolet ray screening agent include an insulating metal oxide, a hydrolyzable organosilicon compound, a silicone compound, and the like.

Examples of the insulating metal oxide include silica, alumina, zirconia, and the like. For example, the insulating metal oxide has a band-gap energy of 5.0 eV or more.

Examples of the benzotriazole-based ultraviolet ray screening agent include 2-(2'-hydroxy-5'-methylphenyl)benzotriazole ("Tinuvin P" available from BASF Japan Ltd.), 2-(2'-hydroxy-3',5'-di-t-butylphenyl)benzotriazole ("Tinuvin 320" available from BASF Japan Ltd.), 2-(2'-hydroxy-3'-t-butyl-5-methylphenyl)-5-chlorobenzotriazole ("Tinuvin 326" available from BASF Japan Ltd.), 2-(2'-hydroxy-3',5'-di-amylphenyl)benzotriazole ("Tinuvin 328" available from BASF Japan Ltd.), and the like. It is preferred that the ultraviolet ray screening agent be a benzotriazole-based ultraviolet ray screening agent containing a halogen atom, and it is more preferred that the ultraviolet ray screening agent be a benzotriazole-based ultraviolet ray screening agent containing a chlorine atom, because those are excellent in ultraviolet ray absorbing performance.

Examples of the benzophenone-based ultraviolet ray screening agent include octabenzone ("Chimassorb 81" available from BASF Japan Ltd.), and the like.

Examples of the triazine-based ultraviolet ray screening agent include "LA-F70" available from ADEKA CORPORATION, 2-(4,6-diphenyl-1,3,5-triazine-2-yl)-5-[(hexyl)oxy]-phenol ("Tinuvin 1577FF" available from BASF Japan Ltd.), and the like.

Examples of the malonic acid ester-based ultraviolet ray screening agent include dimethyl 2-(p-methoxybenzylidene)malonate, tetraethyl-2,2-(1,4-phenylenedimethylidene)bismalonate, 2-(p-methoxybenzylidene)-bis(1,2,2,6,6-pentamethyl-4-piperidinyl)malonate, and the like.

Examples of a commercial product of the malonic acid ester-based ultraviolet ray screening agent include Hostavin B-CAP, Hostavin PR-25, and Hostavin PR-31 (any of these is available from Clariant Japan K.K.).

Examples of the oxanilide-based ultraviolet ray screening agent include a kind of oxalic acid diamide having a substituted aryl group and the like on the nitrogen atom such as N-(2-ethylphenyl)-N'-(2-ethoxy-5-t-butylphenyl)oxalic acid diamide, N-(2-ethylphenyl)-N'-(2-ethoxy-phenyl)oxalic acid diamide, and 2-ethyl-2'-ethoxy-oxanilide ("Sanduvor VSU" available from Clariant Japan K.K.).

Examples of the benzoate-based ultraviolet ray screening agent include 2,4-di-tert-butylphenyl-3,5-di-tert-butyl-4-hydroxybenzoate ("Tinuvin 120" available from BASF Japan Ltd.), and the like.

From the viewpoint of further controlling discoloration, and further controlling deterioration in visible light transmittance, the content of the ultraviolet ray screening agent in 100% by weight of the resin film and in 100% by weight of the layer containing the ultraviolet ray screening agent is preferably 0.1% by weight or more, more preferably 0.2% by weight or more, further preferably 0.3% by weight or more, and especially preferably 0.5% by weight or more. From the viewpoint of further controlling discoloration, and further controlling deterioration in visible light transmittance, the content of the ultraviolet ray screening agent in 100% by weight of the resin film and in 100% by weight of the layer containing the ultraviolet ray screening agent is preferably 2.5% by weight or less, more preferably 2% by weight or less, further preferably 1% by weight or less, and especially preferably 0.8% by weight or less.

### (Oxidation inhibitor)

It is preferred that the resin film, the surface layer and the intermediate layer contain an oxidation inhibitor. By using the oxidation inhibitor, discoloration is further suppressed and the visible light transmittance is less likely to lower even when the resin film is used over a long term or used under high temperature. One kind of the oxidation inhibitor may be used alone, and two or more kinds thereof may be used in combination.

Examples of the oxidation inhibitor include a phenol-based oxidation inhibitor, a sulfur-based oxidation inhibitor, a phosphorus-based oxidation inhibitor, and the like. The phenol-based oxidation inhibitor is an oxidation inhibitor having a phenol skeleton. The sulfur-based oxidation inhibitor is an oxidation inhibitor containing a sulfur atom. The phosphorus-based oxidation inhibitor is an oxidation inhibitor containing a phosphorus atom.

It is preferred that the oxidation inhibitor be a phenol-based oxidation inhibitor or a phosphorus-based oxidation inhibitor.

Examples of the phenol-based oxidation inhibitor include 2,6-di-t-butyl-p-cresol (BHT), butyl hydroxyanisole (BHA), 2,6-di-t-butyl-4-ethylphenol, stearyl β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionate]methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene, bis(3,3'-t-butylphenol)butyric acid glycol ester, bis(3-t-butyl-4-hydroxy-5-methylbenzenepropanoic acid)ethylenebis(oxyethylene), and the like. One kind or two or more kinds among these oxidation inhibitors are preferably used.

Examples of the phosphorus-based oxidation inhibitor include tridecyl phosphite, tris(tridecyl) phosphite, triphenyl phosphite, trinonylphenyl phosphite, bis(tridecyl)pentaerithritol diphosphite, bis(decyl)pentaerithritol diphosphite, tris(2,4-di-t-butylphenyl) phosphite, bis(2,4-di-t-butyl-6-methylphenyl)ethyl ester phosphorous acid, 2,2'-methylenebis(4,6-di-t-butyl-1-phenyloxy)(2-ethylhexyloxy) phosphorus, and the like. One kind or two or more kinds among these oxidation inhibitors are preferably used.

Examples of a commercial product of the oxidation inhibitor include "IRGANOX 245" available from BASF Japan Ltd., "IRGAFOS 168" available from BASF Japan Ltd., "IRGAFOS 38" available from BASF Japan Ltd., "Sumilizer BHT" available from Sumitomo Chemical Co., Ltd., "H-BHT" available from Sakai Chemical Industry Co., Ltd., "IRGANOX 1010" available from BASF Japan Ltd., and "ADK STAB AO-40" available from ADEKA CORPORATION.

From the viewpoint of further controlling discoloration and further controlling deterioration in visible light transmittance, it is preferred that the content of the oxidation inhibitor in 100% by weight of the resin film and in 100% by weight of the layer containing the oxidation inhibitor be 0.1% by weight or more. Moreover, since an effect commensurate with the addition of an oxidation inhibitor is not attained, it is preferred that the content of the oxidation inhibitor be 2% by weight or less in 100% by weight of the resin film.

### (Other ingredients)

The resin film may contain additives such as a flame retardant, an antistatic agent, a moisture-resistance improving agent, a fluorescent brightening agent, and an infrared ray absorber, as necessary. One kind of these additives may be used alone, and two or more kinds thereof may be used in combination.

### (Other details of resin film)

From the viewpoint of effectively improving the sound shielding property, it is preferred that the intermediate layer contain a layer having a glass transition temperature of 10°C or less. The glass transition temperature of the intermediate layer is measured according to the following procedure. A resin composition for forming an intermediate layer or an intermediate layer itself is kneaded as a material, and press-molded with a press molding machine to obtain a test piece having an average thickness of 0.35 mm. The obtained test piece is left to stand at 25°C and a relative humidity of 30% for 12 hours. After leaving to stand for 12 hours, viscoelasticity is measured with ARES-G2 available from TA INSTRUMENTS. At this time, a parallel plate having a diameter of 8 mm is used as a jig. Measurement is conducted under the condition in which the temperature is decreased from 100°C to -10°C at a temperature decreasing rate of 3°C/minute and under the condition of a frequency of 1 Hz and a strain of 1%, and in the measurement results obtained, the peak temperature of the loss tangent is defined as the glass transition temperature Tg (°C).

The thickness of the resin film is not particularly limited. From the viewpoint of the practical aspect and the viewpoint of sufficiently enhancing the heat shielding property, the thickness of the resin film is preferably 0.1 mm or more, and more preferably 0.25 mm or more and is preferably 3 mm or less, and more preferably 1.5 mm or less. When the thickness of the resin film is the above lower limit or more, the penetration resistance of the glass plate-including laminate is further enhanced. When the thickness of the resin film is the above upper limit or less, the transparency of the resin film is further improved.

The method for producing the resin film is not particularly limited. As the method for producing the resin film, a conventionally known method can be used. For example, a production method including kneading the ingredients, and molding the resin film can be recited. A production method of extrusion-molding is preferred because the method is suitable for continuous production.

A method for the kneading is not particularly limited. Examples of such a method include methods using an extruder, a plastograph, a kneader, a Banbury mixer or a calender roll, or the like. A method of using an extruder is suitable, and a method of using a biaxial extruder is more suitable because such a method is suited for continuous production.

### (Glass plate-including laminate)

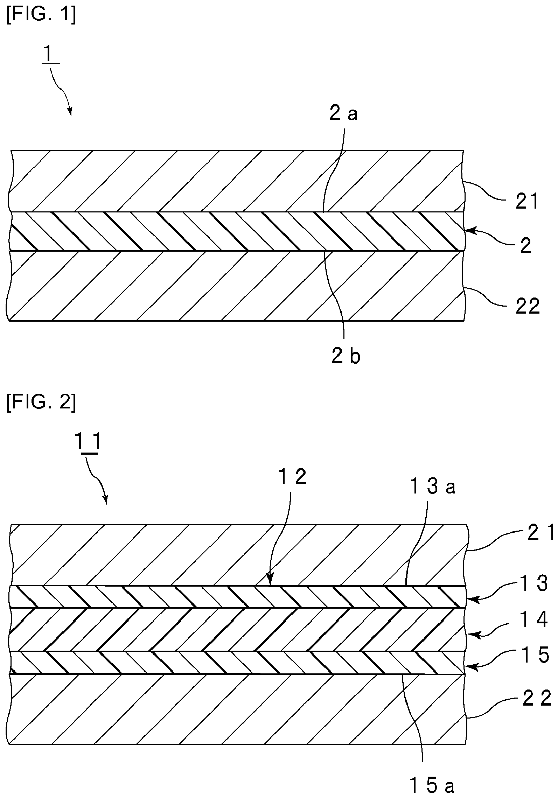

Fig. 1 is a sectional view showing one example of a glass plate-including laminate prepared with the thermoplastic resin film in accordance with one embodiment of the present invention.

A glass plate-including laminate 1 shown in Fig. 1 includes a resin film 2, a first lamination glass member 21 (first glass plate), and a second lamination glass member 22 (which may be a second glass plate). The resin film 2 is a monolayer resin film. The resin film 2 is used for obtaining a glass plate-including laminate. The resin film 2 is a resin film to be used while it is bonded to a glass plate. The glass plate-including laminate 1 is laminated glass.

The resin film 2 is arranged and sandwiched between the first lamination glass member 21 and the second lamination glass member 22. The first lamination glass member 21 is layered on a first surface 2a (one surface) of the resin film 2. The second lamination glass member 22 is layered on a second surface 2b (other surface) opposite to the first surface 2a of the resin film 2.

Fig. 2 is a sectional view showing a modified example of a glass plate-including laminate prepared with the thermoplastic resin film in accordance with one embodiment of the present invention.

A glass plate-including laminate 11 shown in Fig. 2 includes a resin film 12, the first lamination glass member 21 (first glass plate), and the second lamination glass member 22. The resin film 12 is a multilayer resin film. The resin film 12 is used for obtaining a glass plate-including laminate. The resin film 12 is a resin film to be used while it is bonded to a glass plate. The glass plate-including laminate 11 is laminated glass.

The resin film 12 has such a structure that a first layer 13 (first surface layer), a second layer 14 (intermediate layer) and a third layer 15 (second surface layer) are laminated in this order. In the present embodiment, the second layer 14 is a sound insulating layer. The first and the third layers 13, 15 are protective layers.

The resin film 12 is arranged and sandwiched between the first lamination glass member 21 and the second lamination glass member 22. The first lamination glass member 21 is layered on an outer surface 13a of the first layer 13. The second lamination glass member 22 is layered on an outer surface 15a of the second layer 15.

As described above, it suffices that the glass plate-including laminate according to the present invention includes a first glass plate, and a resin film according to the present invention. It is preferred that the resin film be arranged between the first lamination glass member (first glass plate) and the second lamination glass member.

When the thermoplastic resin film according to the present invention is used as at least one layer in a multilayer film having two or more layers, it is preferred that the multilayer film be a sound insulating film having a sound insulating layer so as to improve the sound insulating property of the laminated glass. The multilayer film is a film including the resin film according to the present invention. The multilayer film may include a sound insulating layer and a protective layer. As the multilayer film, a two-layer structure of a sound insulating layer and a protective layer, a three-layer structure of a protective layer, a sound insulating layer, and a protective layer, and a four or more-layer structure having at least one sound insulating layer and at least one protective layer can be recited. In Fig. 2, a multilayer film made up of the first layer 13, the second layer 14, and the third layer 15 is shown. In this case, the resin film according to the present invention can be used as the first layer 13, and the resin film according to the present invention can be used also as the third layer 15. For example, the multilayer film may be made up of only the first layer 13 and the second layer 14 in Fig. 2. In this case, the resin film according to the present invention can be used as the first layer 13, and the resin film according to the present invention can be used also as the second layer 14.

In the case of the multilayer film having a two-layer structure made up of a sound insulating layer and a protective layer, the sound insulating layer may be the resin film according to the present invention, the protective layer may be the resin film according to the present invention, and it is preferred that the protective layer be the resin film according to the present invention. In the case of the multilayer film having a three-layer structure made up of a protective layer, a sound insulating layer, and a protective layer, the protective layer includes the resin film according to the present invention, and the sound insulating layer may be the resin film according to the present invention. It is preferred that the protective layer be the resin film according to the present invention. In the case of the multilayer film having a four or more-layer structure made up of at least one sound insulating layer, and at least one protective layer, the sound insulating layer may be the resin film according to the present invention, and the protective layer may be the resin film according to the present invention. It is preferred that the protective layer be the resin film according to the present invention.

In the multilayer film, the sound insulating layer imparts the sound insulating property in the multilayer film. It is preferred that the sound insulating layer contain a polyvinyl acetal resin (X) and a plasticizer.

For example, the polyvinyl acetal resin (X) can be produced by acetalizing polyvinyl alcohol (PVA) with an aldehyde. It is preferred that the polyvinyl acetal resin (X) be an acetalized product of polyvinyl alcohol. For example, the polyvinyl alcohol can be obtained by saponifying polyvinyl acetate. The saponification degree of the polyvinyl alcohol generally lies within the range of 70 to 99.9% by mole.

An average polymerization degree of the polyvinyl alcohol (PVA) used for production of the polyvinyl acetal resin (X) is preferably 200 or more and preferably 5000 or less, and more preferably 4000 or less. When the average polymerization degree is the above lower limit or more, the penetration resistance is further enhanced. When the average polymerization degree is the above upper limit or less, formation of a sound insulating layer is facilitated.

In production of the polyvinyl acetal resin (X), the number of carbon atoms in aldehyde for acetalizing the polyvinyl alcohol is preferably 4 or more, and is preferably 6 or less. When the number of carbon atoms in aldehyde is the above lower limit or more, it is possible to make a sufficient amount of a plasticizer be contained stably, and it is possible to exhibit excellent sound insulating property. Also, it is possible to prevent a plasticizer from bleeding out. When the number of carbon atoms in aldehyde is the above upper limit or less, synthesis of the polyvinyl acetal resin (X) is facilitated, and the productivity can be ensured.

The aldehyde with 4 to 6 carbon atoms may be a straight-chain aldehyde, or may be a branched aldehyde. Examples of the aldehyde with 4 to 6 carbon atoms include n-butyl aldehyde, and n-valeraldehyde.

The content of the hydroxyl group of the polyvinyl acetal resin (X) is preferably 30% by mole or less, more preferably 28% by mole or less, further preferably 26% by mole or less, and especially preferably 24% by mole or less. When the content of the hydroxyl group of the polyvinyl acetal resin (X) is the above upper limit or less, it is possible to make a plasticizer be contained in an amount necessary for exhibition of the sound insulating property, and it is possible to prevent the plasticizer from bleeding out. The content of the hydroxyl group of the polyvinyl acetal resin (X) is preferably 10% by mole or more, more preferably 15% by mole or more, and further preferably 20% by mole or more.

The acetalization degree of the polyvinyl acetal resin (X) is preferably 60% by mole or more, more preferably 65% by mole or more, and further preferably 68% by mole or more and is preferably 85% by mole or less. When the acetalization degree of the polyvinyl acetal resin (X) is the above lower limit or more, it is possible to enhance the hydrophobicity of the sound insulating layer, and to make a plasticizer be contained in an amount necessary for exhibition of the sound insulating property, so that it is possible to prevent bleeding out of the plasticizer or whitening. When the acetalization degree of the polyvinyl acetal resin (X) is the above upper limit or less, synthesis of the polyvinyl acetal resin (X) is facilitated, and productivity can be ensured.

The acetylation degree of the polyvinyl acetal resin (X) is preferably 0.1% by mole or more, more preferably 1% by mole or more, further preferably 5% by mole or more, and especially preferably 8% by mole or more and is preferably 30% by mole or less, more preferably 25% by mole or less, and further preferably 20% by mole or less. When the acetylation degree of the polyvinyl acetal resin (X) is the above lower limit or more, it is possible to make a plasticizer be contained in an amount necessary for exhibition of the sound insulating property, and bleeding out can be prevented. When the acetylation degree of the polyvinyl acetal resin (X) is the above upper limit or less, it is possible to enhance the hydrophobicity of the sound insulating layer, and it is possible to prevent whitening.

In particular, since it is possible to easily make a plasticizer in an amount necessary for exhibition of the sound insulating property be contained in the sound insulating layer, it is preferred that the polyvinyl acetal resin (X) be a polyvinyl acetal resin having an acetylation degree of 8% by mole or more, or a polyvinyl acetal resin having an acetylation degree of less than 8% by mole and an acetalization degree of 65% by mole or more. It is more preferred that the polyvinyl acetal resin (X) be a polyvinyl acetal resin having an acetylation degree of 8% by mole or more, or a polyvinyl acetal resin having an acetylation degree of less than 8% by mole and an acetalization degree of 68% by mole or more.

The content of the plasticizer in the sound insulating layer, relative to 100 parts by weight of the polyvinyl acetal resin (X) in the sound insulating layer is preferably 45 parts by weight or more, more preferably 50 parts by weight or more, and further preferably 55 parts by weight or more and is preferably 80 parts by weight or less, more preferably 75 parts by weight or less, and further preferably 70 parts by weight or less. When the content of the plasticizer is the above lower limit or more, high sound insulating property can be exhibited, and when the content of the plasticizer is the above upper limit or less, the plasticizer is less likely to bleed out, and deterioration in transparency and adhesivity of the multilayer film can be prevented.

The thickness of the sound insulating layer is preferably 50 µm or more, and more preferably 80 µm or more and is preferably 300 µm or less. When the thickness of the sound insulating layer is the above lower limit or more, sufficient sound insulating property can be exhibited. The thickness of the sound insulating layer shows an average thickness. A cross section shape in the thickness direction of the sound insulating layer may be a rectangular shape, and the sound insulating layer may have a wedge-shaped portion.

The sound insulating layer has one end, and other end on the opposite side of the one end, and may have such a shape that the thickness of the other end is larger than the thickness of the one end. It is preferred that the sound insulating layer have a portion having a wedge-shaped cross section in the thickness direction. In this case, the minimum thickness of the sound insulating layer is preferably 50 µm or more, more preferably 80 µm or more, and further preferably 100 µm or more. When the minimum thickness of the sound insulating layer is the above lower limit or more, sufficient sound insulating property can be exhibited. The upper limit of the maximum thickness of the sound insulating layer is not particularly limited. Taking the thickness as the multilayer film into account, the maximum thickness of the sound insulating layer is preferably 300 µm or less, and more preferably 200 µm or less.

The protective layer prevents a large amount of the plasticizer contained in the sound insulating layer from bleeding out to deteriorate the adhesivity between the multilayer film, and the glass plate and the lamination glass member, and imparts the penetration resistance to the multilayer film. It is preferred that the protective layer contain a polyvinyl acetal resin (Y) and a plasticizer.

For example, the polyvinyl acetal resin (Y) can be produced by acetalizing polyvinyl alcohol (PVA) with an aldehyde. It is preferred that the polyvinyl acetal resin (Y) be an acetalized product of polyvinyl alcohol. For example, the polyvinyl alcohol can be obtained by saponifying polyvinyl acetate. The saponification degree of the polyvinyl alcohol generally lies within the range of 70 to 99.9% by mole.

An average polymerization degree of the polyvinyl alcohol (PVA) used for production of the polyvinyl acetal resin (Y) is preferably 200 or more and preferably 5000 or less, and more preferably 4000 or less. When the average polymerization degree is the above lower limit or more, the penetration resistance of the glass plate-including laminate is further enhanced. When the average polymerization degree is the above upper limit or less, formation of the protective layer is facilitated.

In production of the polyvinyl acetal resin (Y), the number of carbon atoms in aldehyde for acetalizing the polyvinyl alcohol is preferably 3 or more and is preferably 4 or less. When the number of carbon atoms in aldehyde is the above lower limit or more, the penetration resistance of the multilayer film is enhanced. When the number of carbon atoms in aldehyde is the above upper limit or less, productivity of the polyvinyl acetal resin (Y) is improved.

The aldehyde with 3 to 4 carbon atoms may be a straight-chain aldehyde, or may be a branched aldehyde. Examples of the aldehyde with 3 to 4 carbon atoms include n-butyraldehyde.

The content of the hydroxyl group of the polyvinyl acetal resin (Y) is preferably 33% by mole or less, and is preferably 28% by mole or more. When the content of the hydroxyl group of the polyvinyl acetal resin (Y) is the above upper limit or less, it is possible to prevent whitening of the multilayer film. When the content of the hydroxyl group of the polyvinyl acetal resin (Y) is the above lower limit or more, the penetration resistance of the multilayer film is enhanced.

The acetalization degree of the polyvinyl acetal resin (Y) is preferably 60% by mole or more, and more preferably 65% by mole or more and is preferably 80% by mole or less, and more preferably 69% by mole or less. When the acetalization degree of the polyvinyl acetal resin (Y) is the above lower limit or more, it is possible to make a plasticizer be contained in an amount necessary for sufficient exhibition of the penetration resistance. When the acetalization degree of the polyvinyl acetal resin (Y) is the above upper limit or less, it is possible to ensure the adhesive force between the protective layer, and the glass plate and the lamination glass member.

The acetylation degree of the polyvinyl acetal resin (Y) is preferably 0.1% by mole or more, and more preferably 2% by mole or more and preferably 7% by mole or less. When the acetylation degree of the polyvinyl acetal resin (Y) is the above upper limit or less, it is possible to enhance the hydrophobicity of the protective layer, and it is possible to prevent whitening.

The content of the plasticizer in the protective layer, relative to 100 parts by weight of the polyvinyl acetal resin (Y) in the protective layer is preferably 20 parts by weight or more, more preferably 30 parts by weight or more, and further preferably 35 parts by weight or more and is preferably 45 parts by weight or less, and more preferably 43 parts by weight or less. When the content of the plasticizer is the above lower limit or more, penetration resistance can be ensured, and when the content of the plasticizer is the above upper limit or less, it is possible to prevent the plasticizer from bleeding out, and to prevent deterioration in transparency and adhesivity of the multilayer film.

Since the sound insulating property of the glass plate-including laminate is further improved, the content of the hydroxyl group of the polyvinyl acetal resin (Y) is preferably larger, more preferably larger by 1% by mole or more, further preferably larger by 5% by mole or more, and especially preferably larger by 8% by mole or more than the content of the hydroxyl group of the polyvinyl acetal resin (X). By adjusting the contents of the hydroxyl group of the polyvinyl acetal resin (X) and the polyvinyl acetal resin (Y), it is possible to control the content of the plasticizer in the sound insulating layer and the protective layer, and the glass transition temperature of the sound insulating layer lowers. As a result, the sound insulating property of the glass plate-including laminate further improves.

A content of the plasticizer in the sound insulating layer, relative to 100 parts by weight of the polyvinyl acetal resin (X) in the sound insulating layer is referred to as content (X). A content of the plasticizer in the protective layer, relative to 100 parts by weight of the polyvinyl acetal resin (Y) in the protective layer is referred to as content (Y). Since the sound insulating property of the glass plate-including laminate is further improved, the content (X) is preferably larger than the content (Y), and the content (X) is larger than the content (Y) more preferably by 5 parts by weight or more, further preferably by 15 parts by weight or more, and especially preferably by 20 parts by weight or more. By adjusting the content (X) and the content (Y), the glass transition temperature of the sound insulating layer lowers. As a result, the sound insulating property of the glass plate-including laminate further improves.

The thickness of the protective layer can be adjusted within such a range that the protective layer plays its part, and is not particularly limited. When there are projections and depressions on the protective layer, it is preferred that the thickness of the protective layer be made as thick as possible so as to suppress the transfer of the projections and depressions to the interface with the directly contacting sound insulating layer. Specifically, the thickness of the protective layer is preferably 100 µm or more, more preferably 300 µm or more, further preferably 400 µm or more, and especially preferably 450 µm or more. While the thickness of the protective layer is not particularly limited, the thickness is actually about 500 µm or less so as to ensure the thickness of the sound insulating layer to such a degree that sufficient sound insulating property is achieved. The thickness of the protective layer shows an average thickness. A cross section shape in the thickness direction of the protective layer may be a rectangular shape, and the protective layer may have a wedge-shaped portion.

The protective layer has one end, and other end on the opposite side of the one end, and may have such a shape that the thickness of the other end is larger than the thickness of the one end. It is preferred that the protective layer have a portion having a wedge-shaped cross section in the thickness direction. The minimum thickness of the protective layer can be adjusted within such a range that the protective layer plays its part, and is not particularly limited. When there are projections and depressions on the protective layer, it is preferred that the minimum thickness of the protective layer be made as thick as possible so as to suppress the transfer of the projections and depressions to the interface with the directly contacting sound insulating layer. Specifically, the minimum thickness of the protective layer is preferably 100 µm or more, more preferably 300 µm or more, further preferably 400 µm or more, and especially preferably 450 µm or more. The upper limit of the maximum thickness of the protective layer is not particularly limited. In order to ensure the thickness of the protective layer to such a degree that sufficient sound insulating property is achieved, the maximum thickness of the protective layer is preferably 1000 µm or less, and more preferably 800 µm or less.

The thermoplastic resin film according to the present invention may have one end and the other end being at the opposite side of the one end. The one end and the other end are end parts of both sides facing each other in the resin film. In the thermoplastic resin film of the present invention, it is preferred that the thickness of the other end be larger than the thickness of the one end because when the thermoplastic resin film of the present invention is used as an interlayer film for laminated glass, the obtained laminated glass can be favorably used as a head-up display. The thermoplastic resin film of the present invention may have a wedge-shaped cross section. The film including the thermoplastic resin film of the present invention may have a wedge-shaped cross section. If the thermoplastic resin film has a wedge-shaped cross section, it is possible to display an image in a head-up display while preventing occurrence of double images by adjusting the wedge angle θ of the wedge shape in accordance with the attachment angle of laminated glass when the thermoplastic resin film is used as an interlayer film for laminated glass. From the viewpoint of further suppressing double images, the wedge angle θ is preferably 0.1 mrad or more, more preferably 0.2 mrad or more, and further preferably 0.3 mrad or more and is preferably 1 mrad or less, and more preferably 0.9 mrad or less. For example, when a thermoplastic resin film having a wedge-shaped cross section is produced by a method of extruding a resin composition with an extruder, the shape of the resin film or the multilayer film can have a minimum thickness in a region slightly inside from a thinner one end part, and a maximum thickness in a region slightly inside from a thicker one end part. In the present specification, such a shape is also included in the wedge shape. The region slightly inside from a thinner one end part is concretely a region at a distance ranging from 0X to 0.2X inward from the thinner one end when the distance between the one end and the other end is referred to as X. The region slightly inside from a thicker one end part is concretely a region at a distance ranging from 0X to 0.2X inward from the thicker one end when the distance between the one end and the other end is referred to as X.

When the thermoplastic resin film of the present invention has a wedge-shaped cross section, a multilayer film including a sound insulating layer and a protective layer can be prepared by using the thermoplastic resin film. By laminating the protective layer while making the thickness of the sound insulating layer lie within a certain range, it is possible to adjust the cross section of the whole multilayer film to be a wedge shape having a certain wedge angle.

Examples of the lamination glass member include a glass plate, a PET (polyethylene terephthalate) film, and the like. As the laminated glass, laminated glass in which a resin film is sandwiched between a glass plate and a PET film or the like, as well as laminated glass in which a resin film is sandwiched between two glass plates, is included. The laminated glass is a laminate provided with a glass plate, and it is preferred that at least one glass plate be used. It is preferred that the second lamination glass member be a glass plate or a PET film.

Examples of the glass plate include a sheet of inorganic glass and a sheet of organic glass. Examples of the inorganic glass include float plate glass, heat ray-absorbing plate glass, heat ray-reflecting plate glass, polished plate glass, figured glass, wired plate glass, and the like. The organic glass is synthetic resin glass substituted for inorganic glass. Examples of the organic glass include a polycarbonate plate, a poly(meth)acrylic resin plate, and the like. Examples of the poly(meth)acrylic resin plate include a polymethyl (meth)acrylate plate, and the like.

The thickness of the lamination glass member is preferably 1 mm or more and preferably 5 mm or less, and more preferably 3 mm or less. The thickness of the glass plate is preferably 1 mm or more and preferably 5 mm or less, and more preferably 3 mm or less. When the lamination glass member is a PET film, the thickness of the PET film is preferably 0.03 mm or more and is preferably 0.5 mm or less.

The method for producing the glass plate-including laminate is not particularly limited. By bonding the resin film with the first glass plate, it is possible to obtain a glass plate-including laminate. Furthermore, for example, the resin film is sandwiched between the first lamination glass member and the second lamination glass member, and then, passed through pressure rolls or subjected to decompression suction in a rubber bag, so that the air remaining between the first lamination glass member and the resin film, and between the second lamination glass member and the resin film is removed. Afterward, the members are preliminarily bonded together at about 70 to 110°C to obtain a laminate. Next, by putting the laminate into an autoclave or by pressing the laminate, the members are press-bonded together at about 120 to 150°C and under a pressure of 1 to 1.5 MPa. In this way, laminated glass which is a glass plate-including laminate can be obtained.

Each of the resin film and the glass plate-including laminate can be used for automobiles, railway vehicles, aircraft, ships, buildings and the like. Each of the resin film and the glass plate-including laminate can also be used for applications other than these applications. It is preferred that the resin film and the glass plate-including laminate be a resin film and a glass plate-including laminate for vehicles or for building respectively, and it is more preferred that the resin film and the glass plate-including laminate be a resin film and a glass plate-including laminate for vehicles respectively. Each of the resin film and the glass plate-including laminate can be used for a windshield, side glass, rear glass or roof glass of an automobile, and the like. The glass plate-including laminate according to the present invention may be automotive side glass, may be automotive rear glass, or may be automotive roof glass.

From the viewpoint of increasing the transparency of a glass plate-including laminate, when a glass plate-including laminate is obtained by sandwiching a thermoplastic resin film between two sheets of green glass having a thickness of 2 mm in accordance with JIS R3208, the obtained glass plate-including laminate has a haze value of preferably 5% or less, more preferably 3% or less, and further preferably 1.2% or less.

Hereinafter, the present invention will be described in more detail with reference to examples. The present invention is not limited only to these examples.

The following materials were used in examples and comparative examples.

### (Polyvinyl acetal resin)

Polyvinyl butyral resin (PVB(1)) (the polymerization degree of polyvinyl alcohol of 1700, the content of the hydroxyl group of 30% by mole, the acetylation degree of 1% by mole, the acetalization degree (the butyralization degree) of 69% by mole))
Polyvinyl butyral resin (PVB (2)) (the polymerization degree of polyvinyl alcohol of 3000, the content of the hydroxyl group of 23% by mole, the acetylation degree of 12% by mole, the acetalization degree (the butyralization degree) of 65% by mole))
With regard to the polyvinyl butyral resin (PVB), the butyralization degree (the acetalization degree), the acetylation degree and the content of the hydroxyl group were measured by a method in accordance with JIS K6728 "Testing methods for polyvinyl butyral". In this connection, even in the cases of being measured according to ASTM D1396-92, numerical values similar to those obtained by a method in accordance with JIS K6728 "Testing methods for polyvinyl butyral" were exhibited.

### (Plasticizer)

Triethylene glycol di-2-ethylhexanoate (3GO)

### (Pigment)

Carbon black pigment (CAS No. 1333-86-4)
Copper phthalocyanine pigment (1) (CAS No. 147-14-8) (maximum absorption wavelength of 600 nm)
Copper phthalocyanine pigment (2) (CAS No. 1328-53-6) (maximum absorption wavelength of 640 nm)
Quinacridone pigment (CAS No. 3089-17-6)
Perylene pigment (CAS No. 4948-15-6)
Indole pigment (CASNo.5590-18-1)

### Method for measuring maximum absorption wavelength:

By mixing 0.002 parts by weight of a pigment to 100 parts by weight of chloroform, a chloroform solution was obtained. The obtained chloroform solution was put into a quartz cell for spectrophotometer, having an optical path length of 1.0 mm. Using a self-recording spectrophotometer ("U4100" available from Hitachi, Ltd.), 300 to 2500 nm transmittance was measured and a maximum absorption wavelength was determined. The maximum absorption wavelength refers to a wavelength at which the transmittance shows the minimum value, and a wavelength at which the minimum value is the smallest, namely refers to the largest absorption wavelength.

### (Dye)

Anthraquinone dye (1) (CAS No. 81-42-5)
(Hindered amine light stabilizer)
Tinuvin 765 (available from BASF Japan Ltd., N-C (alkyl group) type)
Tinuvin 770 (available from BASF Japan Ltd., N-H (hydrogen group) type)
Tinuvin 123 (available from BASF Japan Ltd., N-O-R (alkoxy group) type)

### (Metal salt)

Mixture (1) (mixture of magnesium acetate and magnesium 2-ethylbutyrate)

### (Ultraviolet ray screening agent)

Tinuvin 326 (available from BASF Japan Ltd.)

### (Oxidation inhibitor)

BHT (2,6-di-t-butyl-p-cresol)
IRGANOX 1010 (Oxidation inhibitor containing a phenol skeleton available from BASF)
ADK STAB AO-40 (Oxidation inhibitor containing a phenol skeleton available from ADEKA) ("AO-40" in Table)

### (Example 1)

### Preparation of composition X for forming first and third resin layers:

To 100 parts by weight of PVB (1), 40 parts by weight of 3GO was added, and further, Tinuvin 765, Tinuvin 326, BHT, and Mixture (1) were added in the contents shown in Table 1 in the entire resin film (all layers), and the resultant mixture was sufficiently kneaded with a mixing roll, to obtain composition X.

### Preparation of composition Y for forming intermediate layer:

To PVB (1), 3GO and a carbon black pigment were added in the mixing amounts shown in Table 1, and the resultant mixture was sufficiently kneaded with a mixing roll, to obtain composition Y.

### Preparation of resin film:

By coextruding the composition X for forming first and third resin layers, and the composition Y for forming an intermediate layer using a coextruder, a resin film (760 µm thick, 100 cm wide) having a layered structure with a stack of a first resin layer/an intermediate layer/a third resin layer was prepared. At this time, the resin film was prepared to have a wedge-like sectional shape, and have such a form that the thickness of the resin film decreases from one end part to the other end part, and the intermediate layer of 20 cm long in the width direction is embedded between the first and the third resin layers, and the intermediate layer has a maximum thickness of 380 µm.

### Preparation of laminated glass:

The obtained resin film was cut out into a piece of 15 cm long × 15 cm wide. At this time, the cutting was performed so that the thickest part of the intermediate layer is located in an end part of the obtainable laminated glass, and the thickness of the intermediate layer decreases from the end part to the end part of the opposite side. Then the resin film was sandwiched between two sheets of green glass having a thickness of 2 mm in accordance with the JIS R3208 (15 cm long × 15 cm wide × 2 mm thick, visible light transmittance of 85%), and vacuum-pressed by retention at 90°C for 30 minutes with a vacuum laminator, to obtain laminated glass.

### (Examples 2 to 13 and Comparative Example 1)

A resin film and laminated glass were obtained in the same manner as that in Example 1 except that the kinds and the amounts of the ingredients of the composition were set to that shown in the following Tables 1, 2.

### (Example 14)

### Preparation of composition X for forming first, third and fifth resin layers:

To 100 parts by weight of PVB (1), 40 parts by weight of 3GO was added, and further, Tinuvin 765, Tinuvin 326, BHT, and Mixture (1) were added in the contents shown in Table 3 in the entire resin film (all layers), and the resultant mixture was sufficiently kneaded with a mixing roll, to obtain composition X.

### Preparation of composition Y for forming intermediate layer:

To PVB (1), 3GO and a carbon black pigment were added in the mixing amounts shown in Table 3, and the resultant mixture was sufficiently kneaded with a mixing roll, to obtain composition Y.

### Preparation of composition Z for forming sound insulating layer:

To PVB (2), 3GO was added in the mixing amount shown in Table 3, and the resultant mixture was sufficiently kneaded with a mixing roll, to obtain composition Z.

### Preparation of resin film:

By coextruding the composition X for forming first, third and fifth resin layers, the composition Y for forming an intermediate layer, and the composition Z for forming a sound insulating layer using a coextruder, a resin film (760 µm thick, 100 cm wide) having a layered structure with a stack of a first resin layer/an intermediate layer/a third resin layer/a sound insulating layer/a fifth resin layer was prepared. At this time, the resin film was prepared so that the sectional shape is a wedge-like shape, and the thickness of the resin film decreases from one end part to the other end part, and the intermediate layer of 20 cm long in the width direction is embedded between the first and the third resin layers, and the intermediate layer has a maximum thickness of 160 µm. Further, the resin film was prepared so that the sound insulating layer has a rectangular sectional shape and a thickness of 100 µm, and the fifth resin layer has a rectangular sectional shape and a thickness of 160 µm.

### Preparation of laminated glass:

Laminated glass was prepared in the same method as in Example 1.

### (Examples 15 to 26 and Comparative Example 2)

A resin film and laminated glass were obtained in the same manner as that in Example 1 except that the kinds and the amounts of the ingredients of the composition were set to that shown in the following Tables 3, 4.

### (Example 27)

### Preparation of composition X for forming first and third resin layers:

To 100 parts by weight of PVB (1), 40 parts by weight of 3GO was added, and further, Tinuvin 765, Tinuvin 326, BHT, and Mixture (1) were added in the contents shown in Table 5 in the entire resin film (all layers). Further, a carbon black pigment was added so that the contents in the obtainable first and third resin layers were the contents shown in Table 5, and the resultant mixture was sufficiently kneaded to obtain composition X.

### Preparation of composition Y for forming sound insulating layer:

To PVB (2), 3GO was added in the mixing amount shown in Table 5, and the resultant mixture was sufficiently kneaded with a mixing roll, to obtain composition Y.

### Preparation of resin film:

By coextruding the composition X for forming first and third resin layers, and the composition Y for forming a sound insulating layer (intermediate layer) using a coextruder, a resin film (800 µm thick, 100 cm wide) having a layered structure with a stack of a first resin layer/a sound insulating layer/a third resin layer was prepared. At this time, the resin film was prepared so that all of the first resin layer, the sound insulating layer, and the third resin layer have a rectangular sectional shape. Also the resin film was prepared so that the first resin layer and the third resin layer have a thickness of 350 µm, and the sound insulating layer has a thickness of 100 µm.

### Preparation of laminated glass:

The obtained resin film was cut out into a piece of 15 cm long × 15 cm wide. Then the resin film was sandwiched between two sheets of green glass having a thickness of 2 mm in accordance with the JIS R3208 (15 cm long × 15 cm wide × 2 mm thick, visible light transmittance of 85%), and vacuum-pressed by retention at 90°C for 30 minutes with a vacuum laminator, to obtain laminated glass.

### (Examples 28 to 40 and Comparative Example 3)

A resin film and laminated glass were obtained in the same manner as that in Example 27 except that the kinds and the amounts of the ingredients of the composition were set to that shown in the following Tables 5, 6.

### (Evaluation)

### (1) Measurement of haze value

A haze value of obtained laminated glass was measured using a haze meter ("TC-HIIIDPK" available from Tokyo Denshoku Co., Ltd.) in accordance with JIS K6714. Regarding the laminated glass obtained in Examples 1 to 26 and Comparative examples 1 to 2, the haze value was measured at the thickest part of the intermediate layer of the obtained laminated glass.

### (2) Total light transmittance

A total light transmittance (TvD) in the thickest part of intermediate layer of the obtained laminated glass was measured in accordance with JIS R3106:1998. The spectral transmittance was measured by a spectrophotometer ("U-4100" available from Hitachi High-Technologies Corporation) while the obtained laminated glass was brought into close and parallel contact with an opening of an integrating sphere so that all the transmitted rays are received by the integrating sphere. The visible light transmittance calculated from the obtained spectral transmittance was determined as a total light transmittance. Regarding the laminated glass obtained in Examples 1 to 26 and Comparative examples 1 to 2, the total light transmittance was measured at the thickest part of the intermediate layer of the obtained laminated glass.

### (3) Evaluation of color irregularity after irradiation with light

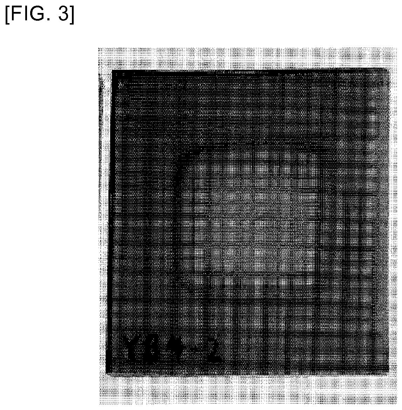

For laminated glass of 15 cm long × 15 cm wide obtained in each of Examples 27 to 40 and Comparative example 3, either one face of the laminated glass was selected as a light source side, and the laminated glass was set at a distance of 230 mm from the light source. Further, the laminated glass was set in such a manner that two of four sides of the laminated glass were hidden by a stationary frame so that the remaining two sides were exposed to light. Using "H75" available from Suga Test Instruments Co., Ltd., the black panel temperature was set at 50°C and the irradiation intensity was set at 70 W/m² (wavelength ranging from 300 nm to 400 nm), and irradiation with light was conducted for 1000 hours at a black panel temperature of 50°C. Color irregularity was judged by visual check according to the following criteria. Fig. 3 illustrates laminated glass in which color irregularity occurred.

Regarding the laminated glass obtained in Examples 1 to 26 and Comparative examples 1 to 2, the color tone differs between the thicker side of the intermediate layer and the thinner side of the intermediate layer due to difference in thickness of the intermediate layer of the thermoplastic resin film. Accordingly, comparison was not conducted for the side of the thicker side of the intermediate layer and the side of the thinner side of the intermediate layer, and the laminated glass was placed so that one side of the remaining two sides was hidden from light by a stationary frame so that the other side of the remaining two sides was exposed to light, and thus change in color tone and color irregularity were compared.

### [Criteria for judgment in color irregularity after irradiation with light]

○: The color tone is identical between the edge parts of the two sides exposed to the light, and the region ranging from 5 mm to 25 mm on the inner side of the edge part, and no color irregularity occurs.

×: The color tone differs between the edge parts of the two sides exposed to the light, and the region ranging from 5 mm to 25 mm on the inner side of the edge part, and color irregularity occurs.

### (4) Discoloration after irradiation with light

For the laminated glass before irradiation with light and the laminated glass after irradiation with light, change in color tone before and after standing was determined by color difference ΔE in accordance with JIS K 8781-4:2013 using a spectrophotometer ("U-4100" available from Hitachi High-Technologies Corporation). The measurement position was a center part of the laminated glass. Discoloration was judged from color difference ΔE according to the following criteria.

### [Criteria for judgment in color irregularity after irradiation with light]

○: ΔE is 3 or less
Δ: ΔE is more than 3 and 10 or less
×: ΔE is more than 10

The details and the results are shown in the following Tables 1 to 6. In the following Tables 1 to 6, the content of the plasticizer in each layer indicates the content relative to 100 parts by weight of the polyvinyl acetal resin in each layer. In the following Tables 1 to 6, the contents of the pigment, the dye, the hindered amine light stabilizer, the ultraviolet ray screening agent, and the oxidation inhibitor indicate the contents in 100% by weight of each layer. In the following Tables 1 to 6, the total of the contents of Mg and K (ppm) indicates the concentration in each layer.

### (5) Identification of pigment

After extraction from a thermoplastic resin film by supercritical extraction with carbon dioxide, or by Soxhlet extraction with an organic solvent, the thermoplastic resin film after extraction was analyzed by pyrolysis GC, MALDI-TOF-MS, TOF-SIMS, LC-MS, GC-MS, TEM-EDS, NMR. Also, the thermoplastic resin film after the Soxhlet extraction was dissolved in a solvent, and after the thermoplastic resin was taken out by a reprecipitation method or the like, a coloring agent obtained by distilling off the solvent used for precipitation was identified by XRD, NMR, MALDI-TOF-MS, TOF-SIMS, LC-MS, GC-MS, IR method, UV-Vis spectrum measurement and the like. When a plurality of pigments were present, they were separated by HPLC, GPC and the like. After identification, as a quantification method, a method of making a calibration curve using a peak area of HPLC, a method of making a calibration curve using a UV-Vis spectrum, and the like were employed.

**[Table 1]**

| | | | Example 1 | Example 2 | Example 3 | Example 4 | Example 5 | Example 6 | Example 7 |
|---|---|---|---|---|---|---|---|---|---|
| First, third resin layers | Polyvinyl acetal resin | Kind | PVB(1) | PVB(1) | PVB(1) | PVB(1) | PVB(1) | PVB(1) | PVB(1) |
| | | Content (parts by weight) | 100 | 100 | 100 | 100 | 100 | 100 | 100 |
| | Plasticizer | Kind | 3GO | 3GO | 3GO | 3GO | 3GO | 3GO | 3GO |
| | | Content (parts by weight) | 40 | 40 | 40 | 40 | 40 | 40 | 40 |
| Intermediate layer | Polyvinyl acetal resin | Kind | PVB(1) | PVB(1) | PVB(1) | PVB(1) | PVB(1) | PVB(1) | PVB(1) |
| | | Content (parts by weight) | 100 | 100 | 100 | 100 | 100 | 100 | 100 |
| | Plasticizer | Kind | 3GO | 3GO | 3GO | 3GO | 3GO | 3GO | 3GO |
| | | Content (parts by weight) | 40 | 40 | 40 | 40 | 40 | 40 | 40 |
| | Pigment or dye | Kind 1 | Carbon black pigment | Carbon black pigment | Carbon black pigment | Copper phthalocyanine pigment (1) | Copper phthalocyanine pigment (1) | Copper phthalocyanine pigment (1) | Copper phthalocyanine pigment (1) |
| | | Content (% by weight) | 0.015 | 0.015 | 0.029 | 0.015 | 0.015 | 0.015 | 0.015 |
| | | Kind 2 | - | - | Copper phthalocyanine pigment (1) | - | - | - | - |
| | | Content (% by weight) | - | - | 0.031 | - | - | - | - |
| | Shape | Sectional shape | Wedge-shaped | Wedge-shaped | Wedge-shaped | Wedge-shaped | Wedge-shaped | Wedge-shaped | Wedge-shaped |
| | | Length of intermediate layer in width direction (cm) | 20 | 20 | 20 | 20 | 20 | 20 | 20 |
| | | Maximum thickness (µm) | 380 | 380 | 380 | 380 | 380 | 380 | 380 |
| | | Minimum thickness (µm) | 0 | 0 | 0 | 0 | 0 | 0 | 0 |
| All layers | Hindered amine-based light stabilizer | Kind | Tinuvin 765 | Tinuvin 123 | Tinuvin 765 | Tinuvin 765 | Tinuvin 765 | Tinuvin 765 | Tinuvin 770 |
| | | Content (% by weight) | 0.015 | 0.015 | 0.015 | 0.015 | 0.015 | 0.015 | 0.015 |
| | Metal salt | Kind | Mixture (1) | Mixture (1) | Mixture (1) | Mixture (1) | Mixture (1) | Mixture (1) | Mixture (1) |
| | | Total of contents of Mg and K (ppm) | 70 | 70 | 70 | 70 | 70 | 70 | 70 |
| | Ultraviolet ray screening agent | Kind | Tinuvin 326 | Tinuvin 326 | Tinuvin 326 | Tinuvin 326 | Tinuvin 326 | Tinuvin 326 | Tinuvin 326 |
| | | Content (% by weight) | 0.15 | 0.15 | 0.15 | 0.15 | 0.15 | 0.15 | 0.15 |
| | Oxidation inhibitor | Kind | BHT | BHT | BHT | BHT | IRGNOX 1010 | AO-40 | IRGNOX 1010 |
| | | Content (% by weight) | 0.15 | 0.15 | 0.15 | 0.15 | 0.15 | 0.15 | 0.15 |
| | Shape | Configuration | First resin layer/intermediate layer/third resin layer | First resin layer/intermediate layer/third resin layer | First resin layer/intermediate layer/third resin layer | First resin layer/intermediate layer/third resin layer | First resin layer/intermediate layer/third resin layer | First resin layer/intermediate layer/third resin layer | First resin layer/intermediate layer/third resin layer |
| | | Sectional shape | Rectangular | Rectangular | Rectangular | Rectangular | Rectangular | Rectangular | Rectangular |
| | | Thickness (µm) | 760 | 760 | 760 | 760 | 760 | 760 | 760 |
| Haze value (%) | | | 0.8 | 0.8 | 2.5 | 1.2 | 1.2 | 1.2 | 1.2 |
| Total light transmittance (%) | | | 44 | 44 | 6 | 38 | 38 | 38 | 38 |
| Occurrence of color irregularity after irradiation with light | | | ○ | ○ | ○ | ○ | ○ | ○ | ○ |
| Discoloration after irradiation with light | | | ○ | ○ | ○ | ○ | ○ | ○ | ○ |

**[Table 2]**

| | | | Example 8 | Example 9 | Example 10 | Example 11 | Example 12 | Example 13 | Comparative Example 1 |
|---|---|---|---|---|---|---|---|---|---|
| First, third resin layers | Polyvinyl acetal resin | Kind | PVB(1) | PVB(1) | PVB(1) | PVB(1) | PVB(1) | PVB(1) | PVB(1) |
| | | Content (parts by weight) | 100 | 100 | 100 | 100 | 100 | 100 | 100 |
| | Plasticizer | Kind | 3GO | 3GO | 3GO | 3GO | 3GO | 3GO | 3GO |
| | | Content (parts by weight) | 40 | 40 | 40 | 40 | 40 | 40 | 40 |
| Intermediate layer | Polyvinyl acetal resin | Kind | PVB(1) | PVB(1) | PVB(1) | PVB(1) | PVB(1) | PVB(1) | PVB(1) |
| | | Content (parts by weight) | 100 | 100 | 100 | 100 | 100 | 100 | 100 |
| | Plasticizer | Kind | 3GO | 3GO | 3GO | 3GO | 3GO | 3GO | 3GO |
| | | Content (parts by weight) | 40 | 40 | 40 | 40 | 40 | 40 | 40 |
| | Pigment or dye | Kind 1 | Copper phthalocyanine pigment (1) | Copper phthalocyanine pigment (2) | Copper phthalocyanine pigment (2) | Quinacridone pigment | Perylene pigment | Indole pigment | Anthraquinone dye (1) |
| | | Content (% by weight) | 0.015 | 0.015 | 0.026 | 0.015 | 0.015 | 0.015 | 0.045 |
| | | Kind 2 | - | - | Quinacridone pigment | - | - | - | - |
| | | Content (% by weight) | - | - | 0.011 | - | - | - | - |
| | Shape | Sectional shape | Wedge-shaped | Wedge-shaped | Wedge-shaped | Wedge-shaped | Wedge-shaped | Wedge-shaped | Wedge-shaped |
| | | Length of intermediate layer in width direction (cm) | 20 | 20 | 20 | 20 | 20 | 20 | 20 |
| | | Maximum thickness (µm) | 380 | 380 | 380 | 380 | 380 | 380 | 380 |
| | | Minimum thickness (µm) | 0 | 0 | 0 | 0 | 0 | 0 | 0 |
| All layers | Hindered amine-based light stabilizer | Kind | Tinuvin 123 | Tinuvin 765 | Tinuvin 765 | Tinuvin 765 | Tinuvin 765 | Tinuvin 765 | Tinuvin 765 |
| | | Content (% by weight) | 0.015 | 0.015 | 0.015 | 0.015 | 0.015 | 0.015 | 0.015 |
| | Metal salt | Kind | Mixture (1) | Mixture (1) | Mixture (1) | Mixture (1) | Mixture (1) | Mixture (1) | Mixture (1) |
| | | Total of contents of Mg and K (ppm) | 70 | 70 | 70 | 70 | 70 | 70 | 70 |
| | Ultraviolet ray screening agent | Kind | Tinuvin 326 | Tinuvin 326 | Tinuvin 326 | Tinuvin 326 | Tinuvin 326 | Tinuvin 326 | Tinuvin 326 |
| | | Content (% by weight) | 0.15 | 0.15 | 0.15 | 0.15 | 0.15 | 0.15 | 0.15 |
| | Oxidation inhibitor | Kind | IRGNOX 1010 | BHT | BHT | BHT | BHT | IRGNOX 1010 | BHT |
| | | Content (% by weight) | 0.15 | 0.15 | 0.15 | 0.15 | 0.15 | 0.15 | 0.15 |
| | Shape | Configuration | First resin layer/intermediate layer/third resin layer | First resin layer/intermediate layer/third resin layer | First resin layer/intermediate layer/third resin layer | First resin layer/intermediate layer/third resin layer | First resin layer/intermediate layer/third resin layer | First resin layer/intermediate layer/third resin layer | First resin layer/intermediate layer/third resin layer |
| | | Sectional shape | Rectangular | Rectangular | Rectangular | Rectangular | Rectangular | Rectangular | Rectangular |
| | | Thickness (µm) | 760 | 760 | 760 | 760 | 760 | 760 | 760 |
| Haze value (%) | | | 1.2 | 0.6 | 1.4 | 1 | 1.8 | 1.9 | 0.3 |
| Total light transmittance (%) | | | 38 | 52 | 35 | 27 | 56 | 78 | 17 |
| Occurrence of color irregularity after irradiation with light | | | ○ | ○ | ○ | ○ | ○ | ○ | × |
| Discoloration after irradiation with light | | | ○ | Δ | Δ | ○ | ○ | Δ | × |

**[Table 3]**

| | | | Example 14 | Example 15 | Example 16 | Example 17 | Example 18 | Example 19 | Example 20 |
|---|---|---|---|---|---|---|---|---|---|
| First, third, fifth resin layers | Polyvinyl acetal resin | Kind | PVB(1) | PVB(1) | PVB(1) | PVB(1) | PVB(1) | PVB(1) | PVB(1) |
| | | Content (parts by weight) | 100 | 100 | 100 | 100 | 100 | 100 | 100 |
| | Plasticizer | Kind | 3GO | 3GO | 3GO | 3GO | 3GO | 3GO | 3GO |
| | | Content (parts by weight) | 40 | 40 | 40 | 40 | 40 | 40 | 40 |
| Intermediate layer | Polyvinyl acetal resin | Kind | PVB(1) | PVB(1) | PVB(1) | PVB(1) | PVB(1) | PVB(1) | PVB(1) |
| | | Content (parts by weight) | 100 | 100 | 100 | 100 | 100 | 100 | 100 |
| | Plasticizer | Kind | 3GO | 3GO | 3GO | 3GO | 3GO | 3GO | 3GO |
| | | Content (parts by weight) | 40 | 40 | 40 | 40 | 40 | 40 | 40 |
| | Pigment or dye | Kind 1 | Carbon black pigment | Carbon black pigment | Carbon black pigment | Copper phthalocyanine pigment (1) | Copper phthalocyanine _{^ J} pigment (1) | Copper phthalocyanine pigment (1) | Copper phthalocyanine pigment (1) |
| | | Content (% by weight) | 0.015 | 0.015 | 0.029 | 0.015 | 0.015 | 0.015 | 0.015 |
| | | Kind 2 | - | - | Copper phthalocyanine pigment (1) | - | - | - | - |
| | | Content (% by weight) | - | - | 0.031 | - | - | - | - |
| | Shape | Sectional shape | Wedge-shaped | Wedge-shaped | Wedge-shaped | Wedge-shaped | Wedge-shaped | Wedge-shaped | Wedge-shaped |
| | | Length of intermediate layer in width direction (cm) | 20 | 20 | 20 | 20 | 20 | 20 | 20 |
| | | Maximum thickness (µm) | 160 | 160 | 160 | 160 | 160 | 160 | 160 |
| | | Minimum thickness (µm) | 0 | 0 | 0 | 0 | 0 | 0 | 0 |
| Sound insulating layer | Polyvinyl acetal resin | Kind | PVB(2) | PVB(2) | PVB(2) | PVB(2) | PVB(2) | PVB(2) | PVB(2) |
| | | Content (parts by weight) | 100 | 100 | 100 | 100 | 100 | 100 | 100 |
| | Plasticizer | Kind | 3GO | 3GO | 3GO | 3GO | 3GO | 3GO | 3GO |
| | | Content (parts by weight) | 60 | 60 | 60 | 60 | 60 | 60 | 60 |
| | Shape | Sectional shape | Rectangular | Rectangular | Rectangular | Rectangular | Rectangular | Rectangular | Rectangular |
| | | Thickness (µm) | 100 | 100 | 100 | 100 | 100 | 100 | 100 |
| All layers | Hindered amine-based light stabilizer | Kind | Tinuvin 765 | Tinuvin 765 | Tinuvin 765 | Tinuvin 765 | Tinuvin 765 | Tinuvin 765 | Tinuvin 770 |
| | | Content (% by weight) | 0.015 | 0.015 | 0.015 | 0.015 | 0.015 | 0.015 | 0.015 |
| | Metal salt | Kind | Mixture (1) | Mixture (1) | Mixture (1) | Mixture (1) | Mixture (1) | Mixture (1) | Mixture (1) |
| | | Total of contents of Mg and K (ppm) | 70 | 70 | 70 | 70 | 70 | 70 | 70 |
| | Ultraviolet ray screening agent | Kind | Tinuvin 326 | Tinuvin 326 | Tinuvin 326 | Tinuvin 326 | Tinuvin 326 | Tinuvin 326 | Tinuvin 326 |
| | | Content (% by weight) | 0.15 | 0.15 | 0.15 | 0.15 | 0.15 | 0.15 | 0.15 |
| | Oxidation inhibitor | Kind | BHT | BHT | BHT | BHT | IRGNOX 1010 | AO-40 | IRGNOX 1010 |
| | | Content (% by weight) | 0.15 | 0.15 | 0.15 | 0.15 | 0.15 | 0.15 | 0.15 |
| | Shape | Configuration | First resin layer/intermediate layer/third resin layer/sound insulating layer/fifth resin layer | First resin layer/intermediate layer/third resin layer/sound insulating layer/fifth resin layer | First resin layer/intermediate layer/third resin layer/sound insulating layer/fifth resin layer | First resin layer/intermediate layer/third resin layer/sound insulating layer/fifth resin layer | First resin layer/intermediate layer/third resin layer/sound insulating layer/fifth resin layer | First resin layer/intermediate layer/third resin layer/sound insulating layer/fifth resin layer | First resin layer/intermediate layer/third resin layer/sound insulating layer/fifth resin layer |
| | | Sectional shape | Rectangular | Rectangular | Rectangular | Rectangular | Rectangular | Rectangular | Rectangular |
| | | Thickness (µm) | 760 | 760 | 760 | 760 | 760 | 760 | 760 |
| Haze value (%) | | | 1 | 1 | 2.7 | 1.3 | 1.3 | 1.3 | 1.3 |
| Total light transmittance (%) | | | 45 | 44 | 6 | 38 | 38 | 38 | 38 |
| Occurrence of color irregularity after irradiation with light | | | ○ | ○ | ○ | ○ | ○ | ○ | ○ |
| Discoloration after irradiation with light | | | ○ | ○ | ○ | ○ | ○ | ○ | ○ |

**[Table 4]**

| | | | Example 21 | Example 22 | Example 23 | Example 24 | Example 25 | Example 26 | Comparative Example 2 |
|---|---|---|---|---|---|---|---|---|---|
| First, third, fifth resin layers | Polyvinyl acetal resin | Kind | PVB(1) | PVB(1) | PVB(1) | PVB(1) | PVB(1) | PVB(1) | PVB(1) |
| | | Content (parts by weight) | 100 | 100 | 100 | 100 | 100 | 100 | 100 |
| | Plasticizer | Kind | 3GO | 3GO | 3GO | 3GO | 3GO | 3GO | 3GO |
| | | Content (parts by weight) | 40 | 40 | 40 | 40 | 40 | 40 | 40 |
| Intermediate layer | Polyvinyl acetal resin | Kind | PVB(1) | PVB(1) | PVB(1) | PVB(1) | PVB(1) | PVB(1) | PVB(1) |
| | | Content (parts by weight) | 100 | 100 | 100 | 100 | 100 | 100 | 100 |
| | Plasticizer | Kind | 3GO | 3GO | 3GO | 3GO | 3GO | 3GO | 3GO |
| | | Content (parts by weight) | 40 | 40 | 40 | 40 | 40 | 40 | 40 |
| | Pigment or dye | Kind 1 | Copper phthalocyanine pigment (1) | Copper phthalocyanine pigment (2) | Copper phthalocyanine pigment (2) | Quinacridone pigment | Perylene pigment | Indole pigment | Anthraquinone dye (1) |
| | | Content (% by weight) | 0.015 | 0.015 | 0.026 | 0.015 | 0.015 | 0.015 | 0.045 |
| | | Kind 2 | - | - | Quinacridone pigment | - | - | - | - |
| | | Content (% by weight) | - | - | 0.011 | - | - | - | - |
| | Shape | Sectional shape | Wedge-shaped | Wedge-shaped | Wedge-shaped | Wedge-shaped | Wedge-shaped | Wedge-shaped | Wedge-shaped |
| | | Length of intermediate layer in width direction (cm) | 20 | 20 | 20 | 20 | 20 | 20 | 20 |
| | | Maximum thickness (µm) | 160 | 160 | 160 | 160 | 160 | 160 | 160 |
| | | Minimum thickness (µm) | 0 | 0 | 0 | 0 | 0 | 0 | 0 |
| Sound insulating layer | Polyvinyl acetal resin | Kind | PVB(2) | PVB(2) | PVB(2) | PVB(2) | PVB(2) | PVB(2) | PVB(2) |
| | | Content (parts by weight) | 100 | 100 | 100 | 100 | 100 | 100 | 100 |
| | Plasticizer | Kind | 3GO | 3GO | 3GO | 3GO | 3GO | 3GO | 3GO |
| | | Content (parts by weight) | 60 | 60 | 60 | 60 | 60 | 60 | 60 |
| | Shape | Sectional shape | Rectangular | Rectangular | Rectangular | Rectangular | Rectangular | Rectangular | Rectangular |
| | | Thickness (µm) | 100 | 100 | 100 | 100 | 100 | 100 | 100 |
| All layers | Hindered amine-based light stabilizer | Kind | Tinuvin 123 | Tinuvin 765 | Tinuvin 765 | Tinuvin 765 | Tinuvin 765 | Tinuvin 765 | Tinuvin 765 |
| | | Content (% by weight) | 0.015 | 0.015 | 0.015 | 0.015 | 0.015 | 0.015 | 0.015 |
| | Metal salt | Kind | Mixture (1) | Mixture (1) | Mixture (1) | Mixture (1) | Mixture (1) | Mixture (1) | Mixture (1) |
| | | Total of contents of Mg and K (ppm) | 70 | 70 | 70 | 70 | 70 | 70 | 70 |
| | Ultraviolet ray screening agent | Kind | Tinuvin 326 | Tinuvin 326 | Tinuvin 326 | Tinuvin 326 | Tinuvin 326 | Tinuvin 326 | Tinuvin 326 |
| | | Content (% by weight) | 0.15 | 0.15 | 0.15 | 0.15 | 0.15 | 0.15 | 0.15 |
| | Oxidation inhibitor | Kind | IRGNOX 1010 | BHT | BHT | BHT | BHT | IRGANOX 1010 | BHT |
| | | Content (% by weight) | 0.15 | 0.15 | 0.15 | 0.15 | 0.15 | 0.15 | 0.15 |
| | Shape | Configuration | First resin layer/intermediate layer/third resin layer/sound insulating layer/fifth resin layer | First resin layer/intermediate layer/third resin layer/sound insulating layer/fifth resin layer | First resin layer/intermediate layer/third resin layer/sound insulating layer/fifth resin layer | First resin layer/intermediate layer/third resin layer/sound insulating layer/fifth resin layer | First resin layer/intermediate layer/third resin layer/sound insulating layer/fifth resin layer | First resin layer/intermediate layer/third resin layer/sound insulating layer/fifth resin layer | First resin layer/intermediate layer/third resin layer/sound insulating layer/fifth resin layer |
| | | Sectional shape | Rectangular | Rectangular | Rectangular | Rectangular | Rectangular | Rectangular | Rectangular |
| | | Thickness (µm) | 760 | 760 | 760 | 760 | 760 | 760 | 760 |
| Haze value (%) | | | 1.3 | 0.6 | 1.5 | 1 | 1.8 | 2 | 0.3 |
| Total light transmittance (%) | | | 38 | 51 | 35 | 27 | 55 | 78 | 17 |
| Occurrence of color irregularity after irradiation with light | | | ○ | ○ | ○ | ○ | ○ | ○ | × |
| Discoloration after irradiation with light | | | ○ | Δ | Δ | ○ | ○ | Δ | × |

**[Table 5]**

| | | | Example 27 | Example 28 | Example 29 | Example 30 | Example 31 | Example 32 | Example 33 |
|---|---|---|---|---|---|---|---|---|---|
| First, third resin layers | Polyvinyl acetal resin | Kind | PVB(1) | PVB(1) | PVB(1) | PVB(1) | PVB(1) | PVB(1) | PVB(1) |
| | | Content (parts by weight) | 100 | 100 | 100 | 100 | 100 | 100 | 100 |
| | Plasticizer | Kind | 3GO | 3GO | 3GO | 3GO | 3GO | 3GO | 3GO |
| | | content (parts by weight) | 40 | 40 | 40 | 40 | 40 | 40 | 40 |
| | Pigment or dye | Kind 1 | Carbon black pigment | Carbon black pigment | Carbon black pigment | Carbon black pigment | Copper phthalocyanine pigment (1) | Copper phthalocyanine pigment (1) | Copper phthalocyanine pigment (1) |
| | | Content (% by weight) | 0.015 | 0.015 | 0.59 | 1.3 | 0.015 | 0.015 | 0.015 |
| | | Kind 2 | - | - | Copper phthalocyanine pigment | Copper phthalocyanine pigment | - | - | - |
| | | Content (% by weight) | - | - | 0.12 | 0.27 | - | - | - |
| Sound insulating layer | Polyvinyl acetal resin | Kind | PVB(2) | PVB(2) | PVB(2) | PVB(2) | PVB(2) | PVB(2) | PVB(2) |
| | | Content (parts by weight) | 100 | 100 | 100 | 100 | 100 | 100 | 100 |
| | Plasticizer | Kind | 3GO | 3GO | 3GO | 3GO | 3GO | 3GO | 3GO |
| | | Content (parts by weight) | 60 | 60 | 60 | 60 | 60 | 60 | 60 |
| | Shape | Sectional shape | Rectangular | Rectangular | Rectangular | Rectangular | Rectangular | Rectangular | Rectangular |
| | | Thickness (µm) | 100 | 100 | 100 | 100 | 100 | 100 | 100 |
| All layers | Hindered amine-based light stabilizer | Kind | Tinuvin 765 | Tinuvin 765 | Tinuvin 765 | Tinuvin 765 | Tinuvin 765 | Tinuvin 765 | Tinuvin 765 |
| | | Content (% by weight) | 0.015 | 0.015 | 0.015 | 0.015 | 0.015 | 0.015 | 0.015 |
| | Metal salt | Kind | Mixture (1) | Mixture (1) | Mixture (1) | Mixture (1) | Mixture (1) | Mixture (1) | Mixture (1) |
| | | Total of contents of Mg and K (ppm) | 70 | | | | | | |
| | Ultraviolet ray screening agent | Kind | Tinuvin 326 | Tinuvin 326 | Tinuvin 326 | Tinuvin 326 | Tinuvin 326 | Tinuvin 326 | Tinuvin 326 |
| | | Content (% by weight) | 0.15 | 0.15 | 0.15 | 0.15 | 0.15 | 0.15 | 0.15 |
| | Oxidation inhibitor | Kind | BHT | BHT | BHT | BHT | BHT | IRGNOX 1010 | AO-40 |
| | | Content (% by weight) | 0.15 | 0.15 | 0.15 | 0.15 | 0.15 | 0.15 | 0.15 |
| | Shape | Configuration | First resin layer/intermediate layer/third resin layer | First resin layer/intermediate layer/third resin layer | First resin layer/intermediate layer/third resin layer | First resin layer/intermediate layer/third resin layer | First resin layer/intermediate layer/third resin layer | First resin layer/intermediate layer/third resin layer | First resin layer/intermediate layer/third resin layer |
| | | Sectional shape | Rectangular | Rectangular | Rectangular | Rectangular | Rectangular | Rectangular | Rectangular |
| | | Thickness (µm) | 800 | 800 | 800 | 800 | 800 | 800 | 800 |
| Haze value (%) | | | 0.7 | 0.7 | 1.1 | 2 | 1.1 | 1.1 | 1.1 |
| Total light transmittance (%) | | | 45 | 45 | 17 | 2 | 38 | 38 | 38 |
| Occurrence of color irregularity after irradiation with light | | | ○ | ○ | ○ | ○ | ○ | ○ | ○ |
| Discoloration after irradiation with light | | | ○ | ○ | ○ | ○ | ○ | ○ | ○ |

**[Table 6]**

| | | | Example 34 | Example 35 | Example 36 | Example 37 | Example 38 | Example 39 | Example 40 | Comparative Example 3 |
|---|---|---|---|---|---|---|---|---|---|---|
| First, third resin layers | Polyvinyl acetal resin | Kind | PVB(1) | PVB(1) | PVB(1) | PVB(1) | PVB(1) | PVB(2) | PVB(2) | PVB(2) |
| | | Content (parts by weight) | 100 | 100 | 100 | 100 | 100 | 100 | 100 | 100 |
| | Plasticizer | Kind | 3GO | 3GO | 3GO | 3GO | 3GO | 3GO | 3GO | 3GO |
| | | Content (parts by weight) | 40 | 40 | 40 | 40 | 40 | 40 | 40 | 40 |
| | Pigment or dye | Kind 1 | Copper phthalocyanine pigment (1) | Copper phthalocyanine pigment (1) | Copper phthalocyanine pigment (2) | Copper phthalocyanine pigment (2) | Quinacridone pigment | Perylene pigment | Indole pigment | Anthraquinone dye (1) |
| | | Content (% by weight) | 0.015 | 0.015 | 0.015 | 0.026 | 0.015 | 0.015 | 0.015 | 0.045 |
| | | Kind 2 | - | - | - | Quinacridone pigment | - | - | - | - |
| | | Content (% by weight) | - | - | - | 0.011 | - | - | - | - |
| Sound insulating layer | Polyvinyl acetal resin | Kind | PVB(2) | PVB(2) | PVB(2) | PVB(2) | PVB(2) | PVB(2) | PVB(2) | PVB(2) |
| | | Content (parts by weight) | 100 | 100 | 100 | 100 | 100 | 100 | 100 | 100 |
| | Plasticizer | Kind | 3GO | 3GO | 3GO | 3GO | 3GO | 3GO | 3GO | 3GO |
| | | Content (parts by weight) | 60 | 60 | 60 | 60 | 60 | 60 | 60 | 60 |
| | Shape | Sectional shape | Rectangular | Rectangular | Rectangular | Rectangular | Rectangular | Rectangular | Rectangular | Rectangular |
| | | Thickness (µm) | 100 | 100 | 100 | 100 | 100 | 100 | 100 | 100 |
| All layers | Hindered amine-based light stabilizer | Kind | Tinuvin 770 | Tinuvin 123 | Tinuvin 765 | Tinuvin 765 | Tinuvin 765 | Tinuvin 765 | Tinuvin 765 | Tinuvin 765 |
| | | Content (% by weight) | 0.015 | 0.015 | 0.015 | 0.015 | 0.015 | 0.015 | 0.015 | 0.015 |
| | Metal salt | Kind | Mixture (1) | Mixture (1) | Mixture (1) | Mixture (1) | Mixture (1) | Mixture (1) | Mixture (1) | Mixture (1) |
| | | Total of contents of Mg and K (ppm) | | | | | | 70 | 70 | 70 |
| | Ultraviolet ray screening agent | Kind | Tinuvin 326 | Tinuvin 326 | Tinuvin 326 | Tinuvin 326 | Tinuvin 326 | Tinuvin 326 | Tinuvin 326 | Tinuvin 326 |
| | | Content (% by weight) | 0.15 | 0.15 | 0.15 | 0.15 | 0.15 | 0.15 | 0.15 | 0.15 |
| | Oxidation inhibitor | Kind | IRGNOX 1010 | IRGNOX 1010 | BHT | BHT | BHT | BHT | IRGANOX 1010 | BHT |
| | | Content (% by weight) | 0.15 | 0.15 | 0.15 | 0.15 | 0.15 | 0.15 | 0.15 | 0.15 |
| | Shape | Configuration | First resin layer/intermediate layer/third resin layer | First resin layer/intermediate layer/third resin layer | First resin layer/intermediate layer/third resin layer | First resin layer/intermediate layer/third resin layer | First resin layer/intermediate layer/third resin layer | First resin layer/intermediate layer/third resin layer | First resin layer/intermediate layer/third resin layer | First resin layer/intermediate layer/third resin layer |
| | | Sectional shape | Rectangular | Rectangular | Rectangular | Rectangular | Rectangular | Rectangular | Rectangular | Rectangular |
| | | Thickness (µm) | 800 | 800 | 800 | 800 | 800 | 800 | 800 | 800 |
| Haze value (%) | | | 1.1 | 1.1 | 0.6 | 1.3 | 1 | 1.7 | 1.8 | 0.3 |
| Total light transmittance (%) | | | 38 | 38 | 52 | 35 | 27 | 55 | 78 | 17 |
| Occurrence of color irregularity after irradiation with light | | | ○ | ○ | ○ | ○ | ○ | ○ | ○ | × |
| Discoloration after irradiation with light | | | ○ | ○ | Δ | Δ | ○ | ○ | Δ | × |

### EXPLANATION OF SYMBOLS

- 1:: Glass plate-including laminate (Laminated glass)
- 2:: Resin film
- 2a:: First surface
- 2b:: Second surface
- 11:: Glass plate-including laminate (Laminated glass)
- 12:: Resin film
- 13:: First layer (first surface layer)
- 14:: Second layer (intermediate layer)
- 15:: Third layer (second surface layer)
- 13a:: Outer surface
- 15a:: Outer surface
- 21:: First lamination glass member (First glass plate)
- 22:: Second lamination glass member

## Claims

1. A thermoplastic resin film comprising:
a thermoplastic resin;
a pigment; and
a hindered amine light stabilizer.

2. The thermoplastic resin film according to claim 1, wherein the thermoplastic resin is a polyvinyl acetal resin or an ionomer resin.

3. The thermoplastic resin film according to claim 1 or 2, further comprising a plasticizer.

4. The thermoplastic resin film according to any one of claims 1 to 3, containing a phthalocyanine compound, a quinacridone compound, an azo compound, a pentaphene compound, a dioxazine compound, a perylene compound, an indole compound or carbon black as the pigment.

5. The thermoplastic resin film according to claim 4, containing a phthalocyanine compound as the pigment.

6. The thermoplastic resin film according to claim 5, wherein the phthalocyanine compound has a maximum absorption wavelength of 500 nm or more and 740 nm or less.

7. The thermoplastic resin film according to claim 4, containing a quinacridone compound, a perylene compound, or an indole compound as the pigment.

8. The thermoplastic resin film according to claim 4, containing carbon black as the pigment.

9. The thermoplastic resin film according to any one of claims 1 to 8, wherein when a glass plate-including laminate is obtained by sandwiching a thermoplastic resin film between two sheets of green glass having a thickness of 2 mm in accordance with JIS R3208, the obtained glass plate-including laminate has a haze value of 5% or less.

10. The thermoplastic resin film according to any one of claims 1 to 9, including a first surface layer and a second surface layer.

11. The thermoplastic resin film according to claim 10, including an intermediate layer between the first surface layer and the second surface layer.

12. The thermoplastic resin film according to claim 11, wherein the intermediate layer contains the pigment.

13. The thermoplastic resin film according to claim 11, wherein
the intermediate layer contains the hindered amine light stabilizer,
the first surface layer optionally contains the hindered amine light stabilizer,
when the first surface layer contains the hindered amine light stabilizer, a content of the hindered amine light stabilizer in 100% by weight of the intermediate layer is larger than a content of the hindered amine light stabilizer in 100% by weight of the first surface layer,
the second surface layer optionally contains the hindered amine light stabilizer, and
when the second surface layer contains the hindered amine light stabilizer, a content of the hindered amine light stabilizer in 100% by weight of the intermediate layer is larger than a content of the hindered amine light stabilizer in 100% by weight of the second surface layer.

14. The thermoplastic resin film according to any one of claims 1 to 13, wherein the hindered amine light stabilizer is a hindered amine light stabilizer in which an alkyl group or an alkoxy group is bonded to a nitrogen atom of a piperidine structure.

15. The thermoplastic resin film according to any one of claims 1 to 14, which is to be used while being bonded to a glass plate.

16. A glass plate-including laminate comprising:
a first glass plate; and
the thermoplastic resin film according to any one of claims 1 to 15,
the thermoplastic resin film being bonded to the first glass plate.

17. The glass plate-including laminate according to claim 16, comprising:
the first glass plate as a first lamination glass member;
the thermoplastic resin film; and
a second lamination glass member, wherein
the thermoplastic resin film is bonded to the first glass plate,
the thermoplastic resin film is bonded to the second lamination glass member, and
the thermoplastic resin film is arranged between the first glass plate and the second lamination glass member.

18. The glass plate-including laminate according to claim 16 or 17, wherein the glass plate-including laminate is automotive side glass.

19. The glass plate-including laminate according to claim 16 or 17, wherein the glass plate-including laminate is automotive rear glass.

20. The glass plate-including laminate according to claim 16 or 17, wherein the glass plate-including laminate is automotive roof glass.
